# FASCICULE DE BREVET EUROPEEN

(11) **EP 4 290 787 B1**
(45) Date de publication et mention de la délivrance du brevet: **28.10.2026**
(21) Numéro de dépôt: 23175443.3
(22) Date de dépôt: 25.05.2023
(51) Int. Cl.: H04B 10/114

(54) **TRANSPONDEUR OPTIQUE DESTINE A CONTRIBUER A UNE SURVEILLANCE D'UN ETAT D'AU MOINS UN DISPOSITIF INTERNE CONTENU DANS UN CONTENEUR COMMUNICANT, CONTENEUR COMMUNICANT ET SYSTÈME DE COMMUNICATION**
OPTISCHER TRANSPONDER ZUR UNTERSTÜTZUNG DER ÜBERWACHUNG EINES ZUSTANDS MINDESTENS EINER IN EINEM KOMMUNIKATIONSBEHÄLTER ENTHALTENEN INTERNEN VORRICHTUNG, KOMMUNIKATIONSBEHÄLTER UND KOMMUNIKATIONSSYSTEM
OPTICAL TRANSPONDER FOR CONTRIBUTING TO MONITORING OF A STATUS OF AT LEAST ONE INTERNAL DEVICE CONTAINED IN A COMMUNICATING CONTAINER, COMMUNICATING CONTAINER AND COMMUNICATION SYSTEM

(30) Priorité: 08.06.2022 FR 2205435; 17.10.2022 FR 2210504
(43) Date de publication de la demande: 13.12.2023
(73) Titulaire: MBDA France, 92350 Le Plessis-Robinson (FR)
(72) Inventeur: FABRE, Pierre-Thibault, 92350 Le Plessis Robinson (FR)
(74) Mandataire: Gevers & Orès

(56) Documents cités:
- CN-A- 108 306 680
- US-A1- 2010 321 485
- US-A1- 2015 162 981
- US-A1- 2017 268 974
- US-A1- 2021 181 702
- US-A1- 2021 227 630
- US-B1- 7 317 876

## Description

### Domaine technique

La présente invention concerne un transpondeur destiné à contribuer à une surveillance d'un état d'au moins un dispositif interne, en particulier un dispositif pyrotechnique, contenu dans un conteneur communicant et un système de communication.

### État de la technique

Il est à ce jour admis que l'un des principaux paramètres physiques déterminant le vieillissement d'un dispositif de type pyrotechnique est la température à laquelle a été soumis ce dispositif tout au long de sa vie.

Les modèles de vieillissement de ces dispositifs pyrotechniques reposent donc principalement sur l'application de la loi d'Arrhenius. L'application de cette loi permet d'estimer à quel moment un matériau énergétique du dispositif pyrotechnique soumis à une variation thermique commencera à perdre significativement en stabilité.

Ces matériaux énergétiques peuvent prendre des formes diverses : propergols, explosifs primaires et matériaux d'amorçage comme par exemple les boosters, compositions oxydoréductrices vives, compositions oxydoréductrices lentes comme par exemple les fumigènes ou les compositions éclairantes, charges secondaires de type militaires, etc.

De façon non limitative, un dispositif pyrotechnique peut être une fusée d'artillerie (charge primaire), un obus d'artillerie (charge secondaire), un missile (charge primaire, secondaire et propulsive), un kit de bombe type MK80/Paveway (charge primaire et secondaire), une roquette (charge propulsive), un fumigène (oxydoréduction lente), une fusée éclairante (oxydoréduction lente), une fusée de détresse (oxydoréduction lente), une bombe de feu d'artifice (composés éclairants et propulsifs), une mine antichar (charge d'éjection, charge primaire et secondaire), etc. Le ou les matériaux énergétiques sont indiqués entre parenthèses.

L'instabilité des matériaux énergétiques est un risque majeur pour la sécurité des utilisateurs de dispositifs pyrotechniques y faisant appel. Ce risque est d'autant plus accru que le matériau énergétique dispose d'un apport d'énergie cinétique par des chocs, vibrations ou accélérations issus de la manutention de tels dispositifs pyrotechniques. C'est pourquoi la règlementation en matière d'exploitation de dispositifs pyrotechniques incluant des matériaux énergétiques impose aux exploitants de maîtriser le vieillissement de ces matériaux par tout moyen utile de manière à retirer du service tout dispositif pyrotechnique pouvant présenter un risque accru pour ses utilisateurs.

Afin de répondre à cette problématique de sécurité, et puisque le facteur majeur de vieillissement des matériaux énergétiques est essentiellement la température, des dispositifs de mesure des paramètres physiques caractéristiques du vieillissement ont été développés.

Bien que l'offre soit à ce jour très diversifiée ces dispositifs de mesure se heurtent à une autre contrainte règlementaire, qui est l'interdiction de toute émission d'ondes radioélectriques à proximité directe de dispositifs pyrotechniques.

Les dispositifs pyrotechniques comportent d'une part au moins un élément comportant un matériau énergétique, et d'autre part au moins un élément de mise à feu capable de déclencher la réaction de ce matériau énergétique. Une part conséquente d'éléments de mise à feu aujourd'hui sur le marché sont aujourd'hui au moins partiellement contrôlés électroniquement. À ce titre, ils présentent une sensibilité intrinsèque aux rayonnements électromagnétiques. L'exposition de tels dispositifs pyrotechniques à des rayonnements électromagnétiques présente par conséquent un risque de sécurité majeur pour les opérateurs de tels dispositifs.

Si des normes existent bien pour répondre au besoin de sécurité des utilisateurs de dispositifs pyrotechniques dans des champs électromagnétiques dits lointains, l'émission radioélectrique à proximité directe (inférieure à quelques mètres) d'un dispositif pyrotechnique est à ce jour interdite, car mal connue.

C'est la raison pour laquelle à ce jour les exploitants de dispositifs de mesure électronique automatique des environnements en milieu pyrotechniques ne disposent que de liaisons filaires pour collecter les données issues de ces dispositifs de mesure. Les contraintes d'implantation de sites de stockage de dispositifs pyrotechniques imposant des quantités maximales de matériaux énergétiques par entrepôt ainsi qu'une distance minimale entre les entrepôts, de tels sites sont généralement très étendus géographiquement. Les coûts d'implantation de réseaux filaires permanents entre les entrepôts sont donc généralement prohibitifs, ce qui impose un relevé manuel entrepôt par entrepôt des mesures réalisées par les enregistreurs de données des dispositifs de mesure. De plus, ce type de travaux entraîne des contraintes préparatoires, documentaires et normatives. Cette tâche fastidieuse n'apporte aucune valeur ajoutée. De plus, sa nature limite la fréquence de relevé des données et complexifie la gestion d'une flotte de capteurs des dispositifs de mesure. Cela peut entraîner une absence d'alertes en cas de panne et une impossibilité de configurer les dispositifs de mesure en masse, entre autres. Cette complexité impose de surcroît une implantation réduite de tels enregistreurs de données afin de limiter le temps passé par les utilisateurs à décharger les données enregistrées dans les entrepôts. Il est donc inenvisageable en pratique de mesurer l'évolution de paramètres physiques à l'échelle de chaque dispositif pyrotechnique ce qui conduit à considérer, parfois à tort, que la mesure en un point précis de l'entrepôt est représentative de la situation de chaque dispositif pyrotechnique stocké dans ledit entrepôt.

L'absence de granularité spatiale et temporelle dans les mesures interdit à ce jour de repérer efficacement des événements transitoires de courte durée et offre une vision imparfaite de l'évolution des grandeurs physiques à l'échelle d'un dispositif pyrotechnique. À ce titre, l'imprécision de la vision sur le vieillissement du parc des dispositifs pyrotechniques d'un exploitant le conduit à prendre des marges de sécurité importantes qui s'avèrent coûteuses.

Le document US 2010/321485 A1, le document US 2017/268974 A1 et le document US 2021/181702 A1 décrivent des systèmes qui sont destinés à être utilisés dans des milieux dangereux présentant des vapeurs volatiles avec un haut risque d'inflammation ou d'explosion. Ces systèmes ne sont pas destinés à être utilisés dans des zones pyrotechniques.

### Exposé de l'invention

**La présente** invention résout cette problématique en proposant une communication compatible à une exploitation en environnement pyrotechnique et permettant entre autres le relevé de telles mesures sans ou avec intervention humaine et sans nécessiter des coûts d'infrastructures importants.

Pour cela, elle concerne un transpondeur optique destiné à contribuer à une surveillance d'un état d'au moins un dispositif interne contenu dans un conteneur communicant susceptible d'être équipé dudit transpondeur optique, la surveillance étant susceptible d'être mise en œuvre par un système de surveillance.

Selon l'invention, le transpondeur optique comporte au moins :
- un élément de réception configuré pour recevoir au moins un premier signal lumineux sans fil provenant d'un système de communication optique et pour émettre au moins un premier signal électrique qui est représentatif du ou des premiers signaux lumineux, le ou les premiers signaux lumineux étant représentatifs d'au moins un ordre de commande,
- un élément d'émission configuré pour recevoir au moins un deuxième signal électrique et pour émettre au moins un deuxième signal lumineux sans fil qui est représentatif du ou des deuxièmes signaux électriques, le ou les deuxièmes signaux lumineux étant destinés à être transmis par l'élément d'émission au système de communication optique,
- une unité de contrôle comprenant :
   ∘ un premier module de réception configuré pour recevoir le ou les premiers signaux électriques provenant de l'élément de réception,
   ∘ un deuxième module de réception configuré pour recevoir d'au moins capteur logé dans le conteneur communicant au moins un troisième signal électrique représentatif au moins d'un premier paramètre physique caractérisant un état physique instantané de l'intérieur du conteneur communicant et/ou d'un deuxième paramètre physique caractérisant un état physique instantané du ou des dispositifs internes destinés à être contenus dans le conteneur communicant,
   ∘ un premier module d'élaboration configuré pour élaborer le ou les deuxièmes signaux électriques représentatifs du ou des troisièmes signaux électriques en fonction du ou des premiers signaux électriques,
   ∘ un premier module de transmission configuré pour transmettre le ou les deuxièmes signaux électriques à l'élément d'émission.

Ainsi, grâce aux éléments de réception et d'émission, une communication bidirectionnelle peut être mise en œuvre entre le ou les dispositifs pyrotechniques et un dispositif utilisateur externe sans utiliser d'ondes radioélectriques tout en répondant aux contraintes réglementaires de sécurité.

En outre, l'unité de contrôle comprend :
- un deuxième module d'élaboration configuré pour élaborer au moins un quatrième signal électrique représentatif du ou des premiers signaux électriques,
- un deuxième module de transmission configuré pour transmettre au ou aux capteurs logés dans le conteneur communicant le ou les quatrièmes signaux électriques.

Par ailleurs, l'élément de réception correspond à un premier transducteur comprenant :
- une lentille de collection agencée pour recevoir le ou les premiers signaux lumineux selon un angle d'ouverture prédéterminé de la lentille de collection,
- un premier filtre optique configuré pour filtrer le ou les premiers signaux lumineux reçus par la lentille de collection, le premier filtre optique étant configuré pour bloquer des fréquences du ou des premiers signaux lumineux hors d'une plage de fréquences prédéterminée,
- une photodiode agencée pour recevoir le ou les premiers signaux lumineux filtrés par le premier filtre optique et apte à élaborer le ou les premiers signaux électriques et à transmettre le ou les premiers signaux électriques à l'unité de contrôle ;
l'élément d'émission correspondant à un deuxième transducteur comprenant une diode électroluminescente agencée pour recevoir le ou les deuxièmes signaux électriques, la diode électroluminescente étant apte à élaborer et émettre le ou les deuxièmes signaux lumineux qui sont représentatifs du ou des deuxièmes signaux électriques.

En outre, l'élément de réception comprend un premier démodulateur configuré pour traduire le ou les premiers signaux électriques élaborés par la photodiode afin qu'ils soient exploitables par l'unité de contrôle, l'élément d'émission comprenant en outre un deuxième modulateur configuré pour traduire le ou les deuxièmes signaux électriques élaborés par l'unité de contrôle afin qu'ils soient exploitables par la diode électroluminescente.

De plus, le premier démodulateur est configuré pour traduire et transmettre le ou les premiers signaux électriques à l'unité de contrôle et réveiller l'unité de contrôle si l'ordre de commande comprend un préambule prédéterminé.

En outre, l'élément d'émission comprend :
- un deuxième filtre optique configuré pour filtrer le ou les deuxièmes signaux lumineux, le deuxième filtre optique étant configuré pour bloquer des fréquences du ou des deuxièmes signaux lumineux hors d'une plage de fréquences prédéterminée,
- une lentille d'émission configurée pour émettre le ou les deuxièmes signaux lumineux filtrés par le deuxième filtre optique.

Selon un autre mode de réalisation, le transpondeur comprend en outre :
- une lentille de collection agencée pour recevoir le ou les premiers signaux lumineux,
- un premier filtre optique configuré pour filtrer le ou les premiers signaux lumineux reçus par la lentille de collection, le premier filtre optique étant configuré pour bloquer des fréquences du ou des premiers signaux lumineux hors d'une plage de fréquences prédéterminée,
- une lentille séparatrice configurée pour séparer le ou les premiers signaux lumineux en deux signaux lumineux secondaires ;

L'élément d'émission comprend :
- un réflecteur configuré pour réfléchir un premier signal secondaire des deux signaux lumineux secondaires,
- un volet configuré pour se trouver alternativement dans une position de fermeture dans laquelle le volet empêche le premier signal lumineux secondaire d'atteindre le réflecteur et dans une position d'ouverture dans laquelle le volet laisse le premier signal lumineux secondaire atteindre le réflecteur ;
et l'élément de réception comprend :
- une photodiode agencée pour recevoir un deuxième signal lumineux secondaire des deux signaux lumineux secondaires et apte à élaborer le ou les premiers **signaux** électriques et à transmettre le ou les premiers signaux électriques à l'unité de contrôle.

En outre, le transpondeur optique comprend :
- une unité de traitement configurée pour transmettre à l'unité de contrôle le ou les premiers signaux électriques et pour recevoir le ou les deuxièmes signaux électriques de l'unité de contrôle ;
- une unité de réveil configurée pour :
   ∘ recevoir le ou les premiers signaux électriques,
   ∘ élaborer un signal électrique de réveil destiné à être transmis à l'unité de traitement si elle détecte une séquence d'impulsions prédéterminée dans le ou les premiers signaux électriques ;
- une unité de transmission configuré pour recevoir le ou les premiers signaux électriques élaborés par la photodiode et transmettre le ou les premiers signaux électriques ;
l'unité de traitement étant apte à recevoir le ou les premiers signaux électriques de l'unité de transmission si l'unité de traitement a reçu le signal électrique de réveil.

Par ailleurs, l'unité de traitement est apte à transmettre au volet un signal électrique de commande de volet, le signal électrique de commande de volet étant apte à commander au volet d'être alternativement dans la position d'ouverture et dans la position de fermeture en fonction du ou des deuxièmes signaux électriques pour que le ou les deuxièmes signaux lumineux soient représentatifs du ou des deuxièmes signaux électriques.

L'invention concerne également un conteneur communicant susceptible de recevoir au moins un dispositif interne.

Selon l'invention, le conteneur communicant comprend au moins un transpondeur optique tel que spécifié ci-dessus.

Selon une particularité, le conteneur comprend en outre :
- au moins un dispositif coordinateur optique comportant :
   ∘ **une première** unité de réception configurée pour recevoir au moins un cinquième signal électrique représentatif au moins d'un premier paramètre physique caractérisant un état physique instantané de l'intérieur du conteneur communicant,
   ∘ une deuxième unité de réception configurée pour recevoir au moins un sixième signal électrique représentatif au moins d'un deuxième paramètre physique caractérisant un état physique instantané du ou des dispositifs internes contenus dans le conteneur communicant,
   ∘ une première unité d'élaboration configurée pour élaborer le ou les troisièmes signaux électriques à partir du ou des quatrièmes signaux électriques et du ou des cinquièmes signaux électriques,
   ∘ une première unité de transmission configurée pour transmettre au ou aux transpondeurs optiques le ou les troisièmes signaux électriques.

En outre, le ou les dispositifs coordinateurs optiques comprennent :
- une troisième unité de réception configurée pour recevoir le ou les quatrièmes signaux électriques du ou des transpondeurs optiques,
- une deuxième unité d'élaboration configurée pour élaborer au moins un septième signal électrique représentatif du ou des quatrièmes signaux électriques,
- une deuxième unité de transmission configurée pour transmettre au ou aux capteurs le ou les septièmes signaux électriques.

En outre, le conteneur communicant comprend :
- au moins un premier capteur comprenant :
   ∘ un premier module de mesure configuré pour mesurer au moins un premier paramètre physique caractérisant un état physique instantané de l'intérieur du conteneur communicant et
   v un premier module d'élaboration configuré pour élaborer le ou les cinquièmes signaux électriques représentatifs du ou des premiers paramètres physiques mesurés ;
- un deuxième capteur comprenant :
   ∘ **un deuxième** module de mesure configuré pour mesurer au moins un deuxième paramètre physique caractérisant un état physique instantané du ou des dispositifs internes contenus dans le conteneur communicant,
   ∘ un deuxième module d'élaboration configuré pour élaborer le ou les sixièmes signaux électriques représentatifs du ou des deuxièmes paramètres physiques mesurés ;
- un dispositif de surveillance comprenant :
   ∘ une quatrième unité de réception configurée pour recevoir le ou les cinquièmes signaux électriques et le ou les sixièmes signaux électriques,
   ∘ une deuxième unité de transmission configurée pour transmettre au ou aux dispositifs coordinateurs optiques le ou les cinquièmes signaux électriques et le ou les sixièmes signaux électriques,
   ∘ une unité de stockage configurée pour stocker les premiers paramètres physiques et/ou les deuxièmes paramètres physiques à partir du ou des signaux électriques et/ou des signaux électriques, respectivement,
   ∘ une unité de répartition configurée pour répartir le ou les cinquièmes signaux électriques et le ou les sixièmes signaux électriques entre la deuxième unité de transmission et l'unité de stockage
   ∘ une unité de surveillance configurée pour détecter une anomalie dans les premiers paramètres physiques et/ou les deuxièmes paramètres physiques à partir du ou des signaux électriques et/ou du ou des signaux électriques et configurée pour émettre un signal électrique d'alerte SA si une anomalie est détectée.

De plus, le dispositif de surveillance comprend en outre :
- une cinquième unité de réception configurée pour recevoir le ou les septièmes signaux électriques,
- une troisième unité d'élaboration configurée pour élaborer au moins un huitième signal électrique représentatif du ou des septièmes signaux électriques,
- une troisième unité de transmission configurée pour transmettre le ou les huitièmes signaux électriques au ou aux capteurs.

L'invention concerne également un système de communication optique destiné à contribuer à une surveillance d'un état d'au moins un dispositif interne.

Selon l'invention, le système de communication comprend :
- au moins un conteneur communicant tel que spécifié ci-dessus, le ou les conteneurs communicant étant destinés à contenir le ou les dispositifs internes,
- un système de surveillance contribuant à la surveillance du ou des premiers paramètres physiques caractérisant un état physique instantané de l'intérieur du conteneur communicant et/ou du ou des deuxièmes paramètres physiques caractérisant un état physique instantané du ou des dispositifs internes contenus dans le conteneur communicant, le système de surveillance comportant au moins un transpondeur de surveillance configuré pour recevoir la ou les deuxièmes signaux lumineux émis par le ou les transpondeurs optiques du ou des conteneurs communicants.

Dans un premier mode de réalisation, le système de surveillance comprend au moins une station de base optique et un concentrateur,
la ou les stations de base optiques comprenant le ou les transpondeurs de surveillance,
le ou les transpondeurs de surveillance comportant au moins un premier transducteur de surveillance configuré pour recevoir au moins le ou les deuxièmes signaux lumineux émis par au moins un transpondeur optique d'au moins un conteneur communicant et pour émettre au moins un huitième signal électrique qui est représentatif du ou des deuxièmes signaux lumineux ;
le concentrateur comprenant :
   - une première unité de réception configurée pour recevoir la ou les huitièmes signaux électriques émis par la ou les stations de base optiques,
   - une première unité d'élaboration configurée pour élaborer au moins un neuvième signal électrique à partir du ou des huitièmes signaux électriques,
   - une première unité de transmission configurée pour transmettre le ou les neuvièmes signaux électriques à un dispositif utilisateur.

En outre, le ou les transpondeurs de surveillance de la ou les stations de base optiques comprennent :
- un deuxième transducteur de surveillance configuré pour recevoir au moins un dixième signal électrique du concentrateur et pour émettre le ou les premiers signaux lumineux à au moins un transpondeur optique d'au moins un conteneur communicant ;
le concentrateur comprenant en outre :
- une deuxième unité de réception configurée pour recevoir au moins un onzième signal électrique du dispositif utilisateur,
- une deuxième unité d'élaboration configurée pour élaborer le ou les dixièmes signaux électriques à partir du ou des onzièmes signaux électriques,
- une deuxième unité de transmission configurée pour transmettre le ou les dixièmes signaux électriques au ou aux stations de base optiques.

Dans un deuxième mode de réalisation, le ou les transpondeurs de surveillance du système de surveillance comportent au moins un premier transducteur de surveillance configuré pour recevoir au moins le ou les deuxièmes signaux lumineux émis par au moins un transpondeur optique d'au moins un conteneur communicant et pour émettre au moins un huitième signal électrique qui est représentatif du ou des deuxièmes signaux lumineux,
le système de surveillance comportant en outre une unité d'information configurée pour informer un utilisateur du ou des premiers paramètres physiques et/ou du ou des deuxièmes paramètres physiques à partir du ou des huitièmes signaux électriques.

De plus, le ou les transpondeurs de surveillance comportent en outre :
- un élément de commande configuré pour transmettre au moins un dixième signal électrique représentatif d'au moins un ordre de commande, l'ordre de commande correspondant à une demande de transmission du ou des premiers paramètres physiques et/ou du ou des deuxièmes paramètres physiques,
- un deuxième transducteur de surveillance configuré pour recevoir le ou les dixièmes signaux électriques de l'élément de commande et pour émettre le ou les premiers signaux lumineux à au moins un transpondeur optique d'au moins un conteneur communicant.

### Brève description des figures

Les figures annexées feront bien comprendre comment l'invention peut être réalisée. Sur ces figures, des références identiques désignent des éléments semblables.
La figure 1 représente schématiquement un transpondeur optique selon un premier mode de réalisation.
La figure 2 représente schématiquement un système de communication optique selon un mode de réalisation.
La figure 3 représente schématiquement un exemple de transpondeurs optiques susceptibles d'équiper un conteneur communicant ainsi qu'un dispositif coordinateur optique connecté à des capteurs.
La figure 4 représente schématiquement un conteneur communicant équipé de transpondeurs optiques.
La figure 5 représente schématiquement un dispositif coordinateur optique.
La figure 6 représente schématiquement un capteur configuré pour mesurer le ou les premiers paramètres physiques caractérisant un état physique instantané de l'intérieur d'un conteneur communicant.
La figure 7 représente schématiquement un capteur configuré pour mesurer le ou les deuxièmes paramètres physiques caractérisant un état physique instantané du ou des dispositifs internes 7 susceptibles d'être contenus dans le conteneur communicant 6.
La figure 8 représente schématiquement un dispositif de surveillance.
La figure 9 représente schématiquement un exemple de conteneur communicant contenant un dispositif interne tel qu'une munition complexe.
La figure 10 représente schématiquement un système de communication optique selon un autre mode de réalisation.
La figure 11 représente deux configurations (a) et (b) de conteneur communicant équipé de transpondeurs optiques.
La figure 12 représente schématiquement une station de base optique.
La figure 13 représente schématiquement un concentrateur.
La figure 14 représente schématiquement un détail du transpondeur optique selon le deuxième mode de réalisation du transpondeur optique.
La figure 15 représente schématiquement un autre détail du transpondeur optique selon le deuxième mode de réalisation du transpondeur optique.
La figure 16 représente schématiquement encore un autre détail du transpondeur optique selon le deuxième mode de réalisation.

### Description détaillée

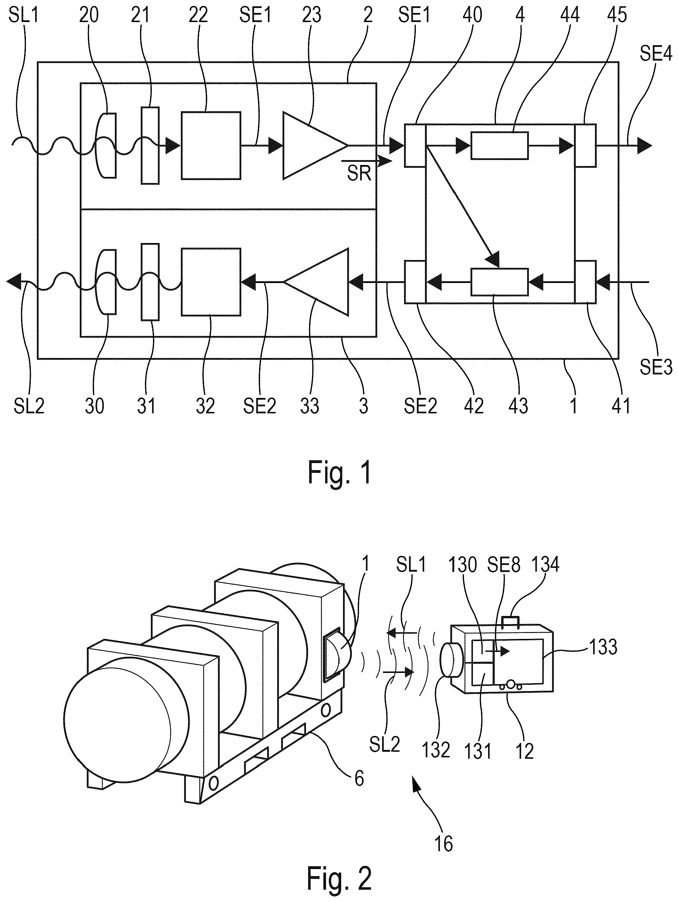

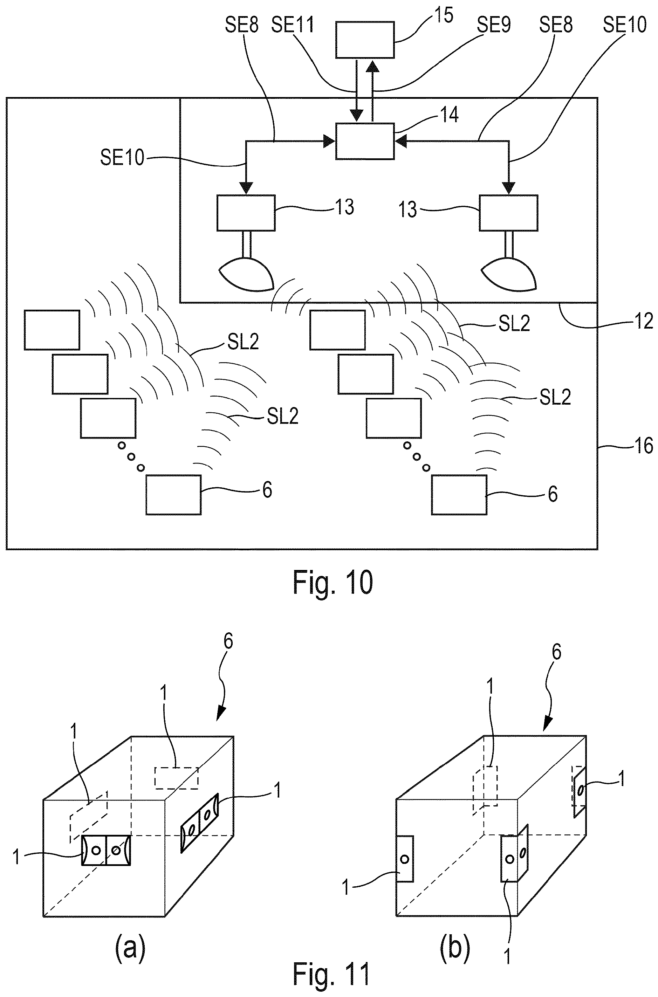

Le transpondeur optique 1 est représenté sur la figure 1. Il est destiné à équiper un conteneur communicant 6 susceptible d'être stocké dans un entrepôt. Comme représenté sur la figure 11, le conteneur communicant 6 peut être équipé d'un ou de plusieurs transpondeurs optiques 1. Le conteneur communicant 6 fait partie d'un système de communication optique 16 (figure 10) destiné à surveiller un état d'au moins un dispositif interne 7, tel qu'un dispositif pyrotechnique, contenu dans le conteneur communicant 6. Le système de communication optique 16 peut comprendre un ou plusieurs conteneurs communicant 6. Le ou les transpondeurs optiques 1 sont destinés à contribuer à une surveillance d'un état d'au moins un dispositif interne 7 contenu dans un conteneur communicant 6. Le ou les transpondeurs optiques 1 sont configurés pour recevoir au moins un signal lumineux SL1 et à émettre un signal lumineux SL2. Le ou les signaux lumineux SL1 peuvent être sous forme d'impulsions lumineuses. De préférence, le ou les transpondeurs optiques 1 sont configurés pour communiquer par signaux lumineux SL1 et SL2 sans fil. Autrement, le ou les transpondeurs optiques 1 sont configurés pour recevoir au moins un signal lumineux SL1 qui est émis sans fil (dans l'environnement dudit transpondeur optique 1) et pour émettre un signal lumineux SL2 sans fil (dans l'environnement dudit transpondeur optique 1).

De préférence, dans la suite de la description, lorsque l'on parle d'émission de signaux lumineux ou de réception de signaux lumineux, on parle d'émission de signaux lumineux sans fil et de réception de signaux lumineux sans fil. Ainsi, les signaux lumineux ne sont pas transmis par fils (ou fibres optiques).

Le système de communication optique 16 comprend au moins un conteneur communicant 6. Le ou les conteneur communicants 6 sont destinés à contenir au moins un dispositif interne 7.

Le système de communication optique 16 comprend également un système de surveillance 12 contribuant à la surveillance d'au moins un premier paramètre physique caractérisant un état physique instantané de l'intérieur du conteneur communicant 6 et/ou d'au moins un deuxième paramètre physique caractérisant un état physique instantané du ou des dispositifs internes 7 contenus dans le conteneur communicant 6.

Le ou les premiers paramètres physiques peuvent correspondre à la température dans le conteneur communicant 6 et/ou à la pression dans le conteneur communicant 6 et/ou un taux d'humidité dans le conteneur communicant 6.

Le ou les deuxièmes paramètres physiques peuvent correspondre à des paramètres physiques représentatif du vieillissement du ou des dispositifs internes 7, tels que la température du ou des dispositifs internes 7 et/ou le taux d'humidité du ou des dispositifs internes 7.

Le système de surveillance 12 comporte au moins un transpondeur de surveillance 132 configuré pour recevoir au moins un signal lumineux SL2 émis par le ou les transpondeurs optiques 1 équipant le ou les conteneurs communicants 6.

Le ou les conteneurs communicants 6 peuvent être disposés dans des entrepôts de stockage pyrotechniques pour y être stockés. Suivant le type de dispositif interne 7 contenu dans le ou les conteneurs communicants 6, ces conteneurs communicants 6 peuvent être disposés de différentes manières lorsqu'il y a plusieurs conteneurs communicants 6. Par exemple, ils peuvent être gerbés à raison d'un maximum de deux à trois conteneurs communicants 6 par empilement. Des allées peuvent être aménagées entre les empilements pour faciliter la manœuvre d'engins de levage.

Dans un premier mode de réalisation du système de communication optique 16 (figure 10), le système de surveillance 12 comprend au moins une station de base optique 13 et un concentrateur 14. La figure 10 représente un exemple d'architecture générique d'un entrepôt de stockage équipé du système de communication optique 16.

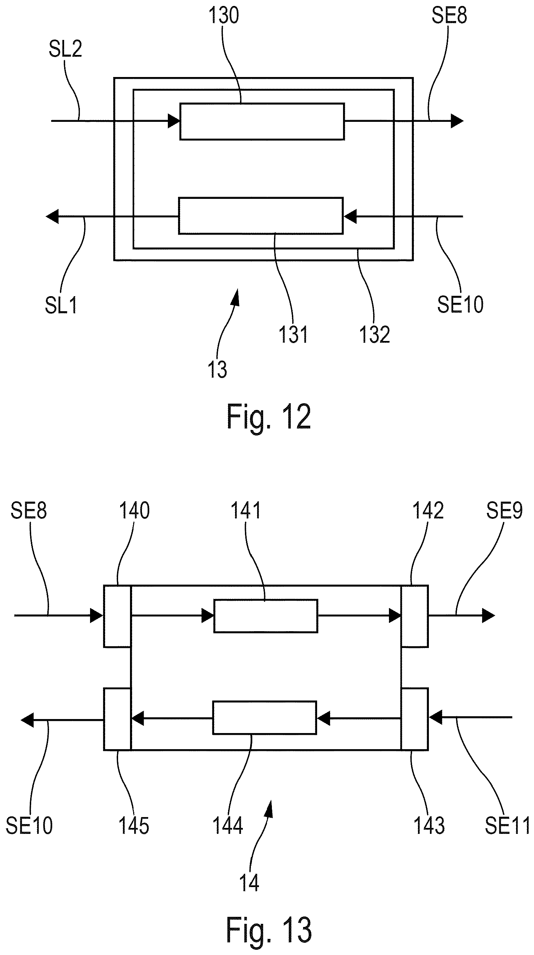

La ou les stations de base optiques 13 (figure 12) comprennent le ou les transpondeurs de surveillance 132. Le ou les transpondeurs de surveillance 132 du ou des stations de base optiques 13 comportent au moins un transducteur de surveillance 130 configuré pour recevoir au moins le ou les signaux lumineux SL2 émis par le ou les transpondeurs optiques 1 du ou des conteneurs communicants 6 et pour émettre au moins un signal électrique SE8 qui est représentatif du ou des signaux lumineux SL2.

Le concentrateur 14 (figure 13) comprend une unité de réception 140 configurée pour recevoir la ou les signaux électriques SE8 émis par la ou les stations de base optiques 13. Le concentrateur 14 comprend également une unité d'élaboration 141 configurée pour élaborer au moins un signal électrique SE9 à partir du ou des signaux électriques SE8. Le ou les signaux électriques SE9 sont représentatifs du ou des signaux électriques SE8. L'élaboration à partir d'un premier signal électrique d'un second signal électrique correspond à une traduction du premier signal électrique vers le second signal électrique qui est représentatif du premier signal électrique, c'est-à-dire qui comprend les mêmes informations. Cette traduction permet de rendre le premier signal électrique généré par un premier dispositif exploitable par un second dispositif qui reçoit le second signal électrique.

Le concentrateur 14 comprend en outre une unité de transmission 142 configurée pour transmettre le ou les signaux électriques SE9 à un dispositif utilisateur 15.

Les stations de base optiques 13 peuvent former un réseau destiné à fournir une couverture maîtrisée et permanente permettant une communication entre lesdites stations de base optiques 13 et le ou les conteneurs communicants 6. Les stations de base optiques 13 peuvent être synchronisées entre elles au moyen du concentrateur 14. Le concentrateur 14 peut ainsi assurer la remontée ou la descente des informations en provenance ou à destination des conteneurs communicants 6. Un entrepôt pyrotechnique peut ainsi être équipé d'une à plusieurs stations de base optiques 13 en fonction des besoins de couverture. Le concentrateur 14 peut transmettre au dispositif utilisateur 15 le ou les signaux électriques S9 à des fins de traitement des données ou de gestion de la flotte de conteneurs communicants 6.

Un signal lumineux SL2 d'un même conteneur communicant 6 peut être reçu simultanément par au moins deux stations de base optiques 13 (du fait d'une communication sans fil des signaux lumineux). Le concentrateur 14 est configuré pour détecter qu'un signal lumineux SL2 émis par un conteneur communicant 6 est reçu par au moins deux stations de base optiques 13. Le concentrateur 14 est alors configuré pour tenir compte d'un seul des signaux lumineux SL2 émis par le même conteneur communicant 6 et reçu par plusieurs stations de base optiques 13. Le ou les transpondeurs de surveillance 132 de la ou les stations de base optiques 13 peuvent comprendre en outre un transducteur de surveillance 131 configuré pour recevoir au moins un signal électrique SE10 du concentrateur 14 et pour émettre le ou les signaux lumineux SL1 à au moins un transpondeur optique 1 d'au moins un conteneur communicant 6. Le concentrateur 14 peut comprendre en outre une unité de réception 143 configurée pour recevoir au moins un signal électrique SE11 du dispositif utilisateur 15, une unité d'élaboration 144 configurée pour élaborer le ou les signaux électriques SE10 à partir du ou des signaux électriques SE11 et une unité de transmission 145 configurée pour transmettre le ou les signaux électriques SE10 au ou aux stations de base optiques 13.

Dans un deuxième mode de réalisation du système de communication optique 16, le système de surveillance 12 peut correspondre à un dispositif de maintenance portatif, comme représenté sur la figure 2. Dans ce deuxième mode de réalisation, le ou les transpondeurs de surveillance 132 du système de surveillance 12 comportent au moins un transducteur de surveillance 130 configuré pour recevoir au moins le ou les signaux lumineux SL2 émis par au moins un transpondeur optique 1 d'au moins un conteneur communicant 6 et pour émettre au moins un signal électrique SE8 qui est représentatif du ou des signaux lumineux SL2. Le système de surveillance 12 comporte en outre une unité d'information 133 configurée pour informer un utilisateur du ou des premiers paramètres physiques et/ou du ou des deuxièmes paramètres physiques à partir du ou des signaux électriques SE8. L'unité d'information 133 peut correspondre à une unité d'affichage 133 configurée pour afficher une représentation du ou des premiers paramètres physiques et/ou du ou des deuxièmes paramètres physiques à partir du ou des signaux électriques SE8.

Dans ce deuxième mode de réalisation, le ou les transpondeurs de surveillance 132 peuvent comporter en outre un élément de commande 134 configuré pour transmettre au moins un signal électrique SE10 représentatif d'au moins un ordre de commande. L'ordre de commande peut correspondre à une demande de transmission du ou des premiers paramètres physiques et/ou du ou des deuxièmes paramètres physiques du ou des conteneurs communicants 6.

Le système de surveillance 12 comprend en outre un transducteur de surveillance 131 configuré pour recevoir le ou les signaux électriques SE10 de l'élément de commande 134 et pour émettre le ou les signaux lumineux SL1 à au moins un transpondeur optique 1 d'au moins un conteneur communicant 6.

Les deux modes de réalisation du système de communication optique 16 décrits ci-dessus peuvent être combinés. Il est en effet possible d'utiliser un dispositif de maintenance portatif conformément au deuxième mode de réalisation dans un entrepôt équipé du système de communication optique 16 selon le premier mode de réalisation.

Un exemple du ou des transpondeurs optiques 1 destinés à équiper le ou les conteneurs communicants 6 est représenté sur la figure 1.

Le ou les transpondeurs optiques 1 comportent au moins un élément de réception 2 configuré pour recevoir au moins un signal lumineux SL1 provenant du système de communication optique 16 et pour émettre au moins un signal électrique SE1 qui est représentatif du ou des signaux lumineux SL1. Le ou les signaux lumineux SL1 sont représentatifs d'au moins un ordre de commande. L'ordre de commande peut correspondre à une demande de transmission au moins d'un premier paramètre physique caractérisant un état physique instantané de l'intérieur du conteneur communicant 6 et/ou d'un deuxième paramètre physique caractérisant un état physique instantané du ou des dispositifs internes 7 contenus dans le conteneur communicant 6. L'ordre de commande peut correspondre à une demande de changement de paramétrage du système de communication 16.

Selon un premier mode de réalisation de transpondeur optique 1, l'élément de réception 2 peut correspondre à un transducteur. Le transducteur 2 peut comprendre une lentille de collection 20, un filtre optique 21 et une photodiode 22. La lentille de collection 20 est agencée pour recevoir le ou les signaux lumineux SL1 selon un angle d'ouverture prédéterminé de la lentille de collection 20. Par exemple, l'angle d'ouverture est prédéterminé de façon que le ou les signaux lumineux SL1 reçus proviennent d'une zone plus étendue que la surface active de la photodiode 22. Ainsi, l'angle d'ouverture permet de définir la zone de l'environnement du conteneur communicant 6 dans lequel un transpondeur optique 1 du conteneur communicant 6 peut recevoir un signal lumineux SL1 émis. La lentille de collection 20 peut également avoir un rôle de protection contre les chocs. Le filtre optique 21 est configuré pour filtrer le ou les signaux lumineux SL1 reçus par la lentille de collection 20. Le filtre optique 21 est configuré pour bloquer des fréquences du ou des signaux lumineux SL1 hors d'une plage de fréquences prédéterminée. Par exemple, la plage de fréquence est déterminée de façon que le filtre optique 21 supprime les composantes parasites du ou des signaux lumineux SL1, tels que la lumière ambiante et artificielle. Le filtre optique 21 permet alors de conserver seulement une portion du spectre lumineux du ou des signaux lumineux SL1 correspondant à une plage de fréquence de travail de la photodiode 22. En effet, lorsque les signaux lumineux sont transmis sans fil, lesdits signaux peuvent être parasités par la lumière ambiante et artificielle.

À titre d'exemple non limitatif, la photodiode 22 fonctionne dans une plage de fréquence du spectre visible au spectre infrarouge, notamment entre 400 nm et 1 mm. La plage de fréquence est choisie en fonction des conditions d'éclairage de l'entrepôt dans lequel le ou les conteneurs communicants 6 sont susceptibles d'être stockés. En particulier, la plage de fréquence est choisie de façon à se situer en dehors du spectre des pollutions lumineuses ambiantes telles que l'éclairage artificiel.

La photodiode 22 est agencée pour recevoir le ou les signaux lumineux SL1 filtrés par le filtre optique 21. La photodiode 22 est apte à élaborer le ou les signaux électriques SE1 et à transmettre le ou les signaux électriques SE1 à l'unité de contrôle 4.

Le ou les transpondeurs comprennent également un élément d'émission 3 configuré pour recevoir au moins un signal électrique SE2 et pour émettre au moins un signal lumineux SL2 qui est représentatif du ou des signaux électriques SE2. Le ou les signaux lumineux SL2 sont destinés à être transmis par le transducteur 3 au système de communication optique 16.

Selon le premier mode de réalisation du transpondeur optique, l'élément d'émission 3 peut correspondre à un transducteur. Le transducteur 3 comprend une diode électroluminescente 32 agencée pour recevoir le ou les signaux électriques SE2. La diode électroluminescente 32 est apte à élaborer et émettre au moins un signal lumineux SL2 qui est représentatif du ou des signaux électriques SE2.

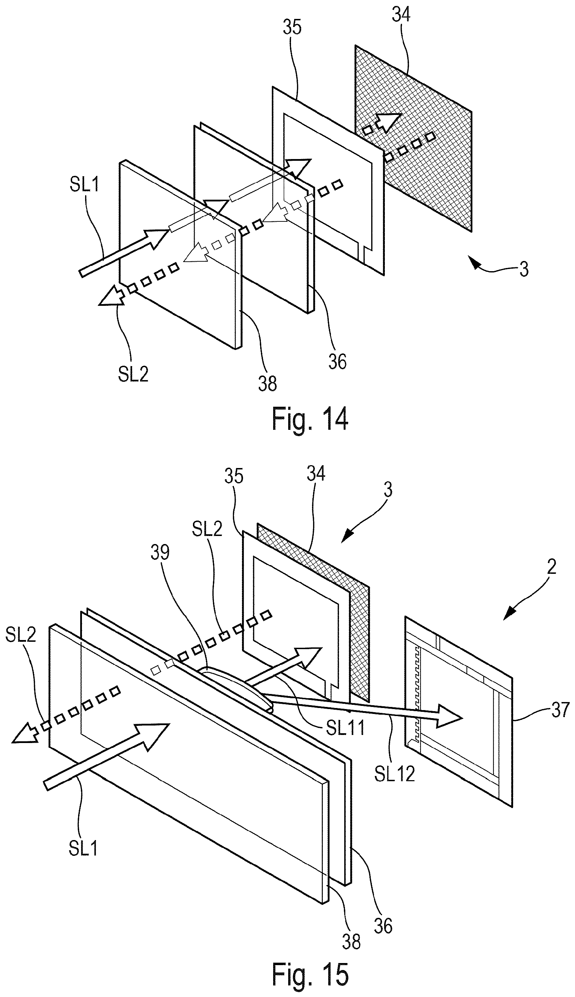

Selon un deuxième mode de réalisation du transpondeur optique 1, l'élément d'émission 3 peut comprend un dispositif de rétrodiffusion (« backscattering » en anglais) configuré pour recevoir le ou les signaux électrique SE2 et émettre le ou les signaux lumineux SL2 (figure 14). Par exemple, le dispositif de rétrodiffusion comprend au moins un réflecteur 34 configuré pour réfléchir le ou les signaux lumineux SL1 et un volet 35 configuré pour être, alternativement, dans une position empêchant le ou les signaux lumineux SL1 d'atteindre le réflecteur 34 et une position permettant le ou les signaux lumineux SL1 d'atteindre le réflecteur 34. Le ou les signaux lumineux SL2 correspondent au ou aux signaux lumineux SL1 réfléchis par le réflecteur 34. La position du volet 35 est fonction du ou des signaux électriques SE2. Ce deuxième mode de réalisation du transpondeur optique 1 est plus complètement décrit ci-après dans la description.

Le ou les transpondeurs optiques 1 comprennent en outre une unité de contrôle 4. L'unité de contrôle 4 comporte un module de réception 40 configuré pour recevoir le ou les signaux électriques SE1 provenant de l'élément de réception 2. Le ou les transpondeurs optiques 1 présentent aussi un module de réception 41 configuré pour recevoir d'au moins capteur 9, 10 logé dans le conteneur communicant 6 (équipé du ou des transpondeurs optiques 1) au moins un signal électrique SE3 représentatif au moins d'un premier paramètre physique caractérisant un état physique instantané de l'intérieur du conteneur communicant 6 et/ou d'un deuxième paramètre physique caractérisant un état physique instantané du ou des dispositifs internes 7 destinés à être contenus dans le conteneur communicant 6.

Le ou les transpondeurs optiques 1 comportent en outre un module d'élaboration 43 configuré pour élaborer le ou les signaux électriques SE2 représentatifs du ou des signaux électriques SE3 en fonction du ou des signaux électriques SE1. De plus, le ou les transpondeurs optiques 1 comprennent un module de transmission 42 configuré pour transmettre le ou les signaux électriques SE2 à l'élément d'émission 3.

Par ailleurs, l'unité de contrôle 4 peut comprendre en outre un module d'élaboration 44 et un module de transmission 45. Le module d'élaboration 44 est configuré pour élaborer au moins un signal électrique SE4 représentatif du ou des signaux électriques SE1. Le module de transmission 45 est configuré pour transmettre au ou aux capteurs 9, 10 logés dans le conteneur communicant 6 le ou les signaux électriques SE4.

De plus, l'élément d'émission 3 peut comprendre en outre un filtre optique 31 et une lentille d'émission 30. Le filtre optique 31 est configuré pour filtrer le ou les signaux lumineux SL2. Le filtre optique 31 est configuré pour bloquer des fréquences du ou des signaux lumineux SL2 hors d'une plage de fréquences prédéterminée. La lentille d'émission 30 est configurée pour émettre le ou les signaux lumineux SL2 filtrés par le filtre optique 31. La lentille d'émission 30 peut présenter un angle d'ouverture prédéterminé. Elle peut aussi peut protéger la diode électroluminescente 32 dans le transpondeur optique 1.

À titre d'exemple non limitatif, le filtre optique 31 correspond à un filtre passe-bande afin de resserrer le spectre fréquentiel du ou des signaux lumineux SL2 émis par la diode électroluminescente 32. Cela permet aussi d'éviter que des signaux lumineux parasites susceptibles d'être émis par la diode électroluminescente 32 ne soit émis par le transpondeur optique 1.

Par ailleurs, l'élément de réception 2 peut comprendre en outre un démodulateur 23 configuré pour traduire le ou les signaux électriques SE1 élaborés par la photodiode 22 afin qu'ils soient exploitables par l'unité de contrôle 4. Avantageusement, le démodulateur 23 est configuré pour traduire et transmettre le ou les signaux électriques SE1 traduits à l'unité de contrôle 4 et réveiller l'unité de contrôle 4 si l'ordre de commande comprend un préambule prédéterminé. Le conditionnement de la transmission du ou des signaux électriques SE1 par le démodulateur 23 permet une économie d'énergie. Le démodulateur 23 peut ainsi comprendre un module de détection analogique (non représenté) de très faible consommation capable de réveiller l'unité de contrôle 4 grâce à un signal de réveil SR dans le but de préparer l'ensemble le transpondeur optique 1 à recevoir une communication entrante par l'intermédiaire du ou des signaux lumineux SL1. Cette détection intervient dès lors qu'un signal lumineux SL1 est reçu par le transpondeur optique 1 sur une fréquence prédéterminée et/ou un préambule prédéterminé dans l'ordre de de commande. Un signal de réveil SR émis par le démodulateur 23 peut également être émis par l'unité de contrôle 4 en aval du transpondeur optique 1 avec le signal électrique SE1. Le préambule peut correspondre à une ligne symboles ou un temps d'attente entre deux réceptions du signal lumineux SL1.

L'élément d'émission 3 peut également comprendre en outre un modulateur 33 configuré pour traduire le ou les signaux électriques SE2 élaborés par l'unité de contrôle 4 afin qu'ils soient exploitables par la diode électroluminescente 30.

Les transpondeurs de surveillance 132 des stations de base optiques 13 peuvent également être identiques aux transpondeurs optiques 1. Toutefois, les transpondeurs de surveillance 132 peuvent comprendre des caractéristiques différentes. Par exemple, le filtre optique 21 ou 31, photodiode 22 et/ou la diode électroluminescente 32 peuvent fonctionner pour des fréquences lumineuses différentes afin que le ou les signaux lumineux SL1 et le ou les signaux lumineux SL2 aient une fréquence lumineuse respective différente. Cette configuration permet une communication bidirectionnelle. Avantageusement, les signaux lumineux SL1 et SL2 peuvent être orientés de manière à regarder majoritairement en direction du plafond de l'entrepôt de stockage.

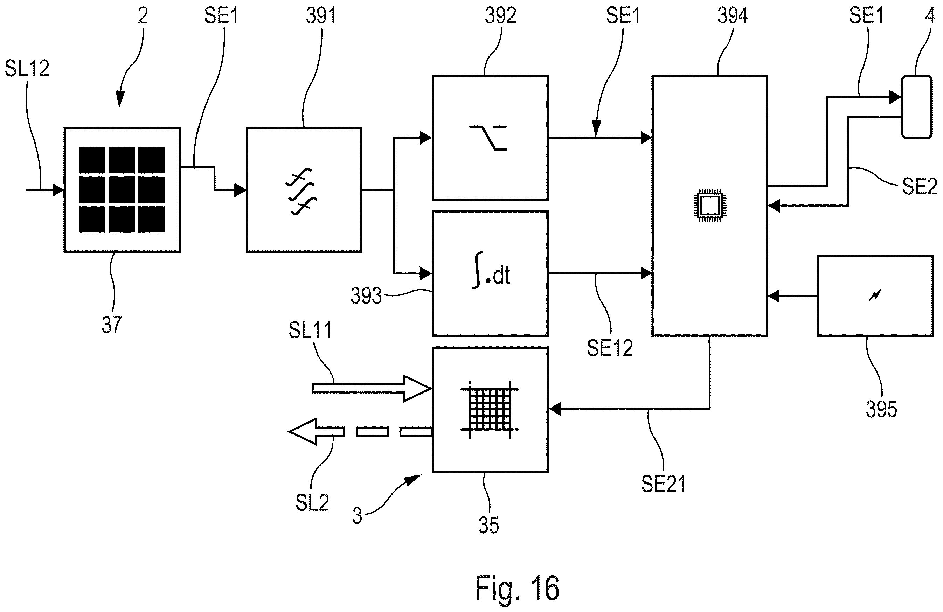

Selon le deuxième mode de réalisation de transpondeur optique 1 (figure 14, figure 15 et figure 16), le transpondeur optique 1 comprend en outre une lentille de collection 38 agencée pour recevoir le ou les premiers signaux lumineux SL1, un filtre optique 36 configuré pour filtrer le ou les signaux lumineux SL1 reçus par la lentille de collection 38.

Le filtre optique 36 est configuré pour bloquer des fréquences du ou des signaux lumineux SL1 hors d'une plage de fréquences prédéterminée.

Dans ce deuxième mode de réalisation, le transpondeur optique 1 comprend également une lentille séparatrice 39 configurée pour séparer le ou les signaux lumineux SL1 en deux signaux lumineux secondaires SL11 et SL12 (figure 15). Dans ce deuxième mode de réalisation, l'élément d'émission 3 comprend un réflecteur 34 configuré pour réfléchir un signal secondaire SL11 des deux signaux lumineux secondaires SL11 et SL12 et un volet 35 configuré pour se trouver alternativement dans une position de fermeture dans laquelle le volet 35 empêche le signal lumineux secondaire SL11 d'atteindre le réflecteur 34 et dans une position d'ouverture dans laquelle le volet 35 laisse le signal lumineux secondaire SL11 atteindre le réflecteur 34. La position de fermeture et la position d'ouverture du volet 34 peuvent correspondre, respectivement, à un état opaque du volet 34 dans lequel ledit volet 34 empêche le signal lumineux secondaire SL11 d'atteindre le réflecteur 34 (il est opaque au signal lumineux secondaire SL11) et à un état transparent du volet 34 dans lequel ledit volet 34 laisse le signal lumineux secondaire SL11 atteindre le réflecteur 34 (il est transparent au signal lumineux secondaire SL11). Dans ce deuxième mode de réalisation, l'élément de réception 2 comprend une photodiode 37 agencée pour recevoir un signal lumineux secondaire SL12 des deux signaux lumineux secondaires SL11 et SL12. L'élément de réception est apte à élaborer le ou les signaux électriques SE1 et à transmettre le ou les signaux électriques SE1 à l'unité de contrôle 4.

Dans ce deuxième mode de réalisation, le transpondeur optique 1 peut comprendre en outre une unité de traitement 394, une unité de réveil 393 et une unité de transmission 392.

L'unité de traitement 394 est configurée pour transmettre à l'unité de contrôle 4 le ou les signaux électriques SE1 et pour recevoir le ou les signaux électrique SE2 de l'unité de contrôle 4. L'unité de traitement 394 peut être alimentée par un dispositif d'alimentation électrique 395.

L'unité de réveil 393 est configurée pour :
- recevoir le ou les signaux électriques SE1,
- élaborer un signal électrique de réveil SE12 destiné à être transmis à l'unité de traitement 394 si l'unité de réveil 393 détecte une séquence d'impulsions prédéterminée dans le ou les signaux électriques SE1.

La séquence d'impulsions prédéterminée peut correspondre à une série d'impulsions lumineuses émises à une fréquence prédéterminée.

L'unité de transmission 392 est configuré pour recevoir le ou les signaux électriques SE1 élaborés par la photodiode 37 et transmettre le ou les signaux électriques SE1 à unité de traitement 394.

L'unité de traitement 394 est apte à recevoir le ou les signaux électriques SE1 de l'unité de transmission 392 si l'unité de traitement 394 a reçu le signal électrique de réveil SE12.

De plus, dans ce deuxième mode de réalisation, l'unité de traitement 394 peut être apte à transmettre au volet 35 un signal électrique de commande de volet SE21. Le signal électrique de commande de volet SE21 est apte à commander au volet 35 d'être alternativement dans la position d'ouverture et dans la position de fermeture en fonction du ou des signaux électriques SE2 pour que le ou les signaux lumineux SL2 soient représentatifs du ou des signaux électriques SE2.

Dans une variante du deuxième mode de réalisation, le volet 35 comprend plusieurs éléments de volet organisés en matrice. Chacun des éléments de volet peut être commandé indépendamment les uns des autres entre une position ouverte et une position fermée alternativement. Dans cette variante, le signal électrique de commande de volet SE21 comprend des sous-commandes pour commander indépendamment chacun des éléments de volet. Couplée à une modulation de l'ouverture de type modulation d'impulsions en amplitude ou PAM (« pulse-amplitude modulation » en anglais), cette variante permet un encodage d'un plus grand nombre de symboles par unité de temps, ce qui permet d'augmenter le débit de communication.

Le volet 35 peut comprendre un écran à cristaux liquides commandé par le signal électrique de commande de volet SE21.

Par exemple, cet écran à cristaux liquides peut se trouver alternativement :
- dans un état opaque dans lequel le signal SE21 commande à l'écran à cristaux liquides d'être opaque pour le signal lumineux secondaire SL11 (le signal SL11 ne peut pas traverser l'écran à cristaux liquide pour atteindre le réflecteur 34),
- dans un état transparent dans lequel le signal SE21 commande à l'écran à cristaux liquides d'être transparent pour le signal lumineux secondaire SL11 (le signal SL11 peut traverser l'écran à cristaux liquides pour atteindre le réflecteur 34).

Dans ce deuxième mode de réalisation, le transpondeur optique 1 peut aussi comprendre un filtre passe bande 391 configuré pour filtrer le ou les signaux électriques SE1 émis par la photodiode 37. Ce filtrage permet d'éviter que des signaux électriques parasites susceptibles d'être produit par la photodiode 37 ne soit transmis à l'unité de transmission 392 et à l'unité de réveil 393.

L'écran à cristaux liquides peut comprendre à un écran à cristaux liquides monochrome ou à un écran à cristaux liquides couleur. Dans le cas d'un écran à cristaux liquides couleur, l'écran à cristaux liquides peut être transparent ou opaque selon la longueur d'onde de signal lumineux susceptible de le traverser.

Le conteneur communicant 6 susceptible de recevoir au moins un dispositif interne 7 comprend au moins un transpondeur optique 1.

Le conteneur communicant 6 peut aussi comprendre au moins un dispositif coordinateur optique 8. Le dispositif coordinateur optique 8 peut faire partie d'un transpondeur optique 1.

Afin d'optimiser la couverture optique entre les transpondeurs optiques 1 d'un conteneur communicant 6 et le système de surveillance 12 d'un entrepôt pyrotechnique, deux configurations de montage de ces transpondeurs optiques 1 sur le conteneur communicant 6 peuvent être considérées. Les deux configurations sont représentées sur la figure 11. La configuration (a) fait intervenir 4 transpondeurs optiques 1 montés sur les quatre faces du conteneur communicant 6. Cette configuration peut faire intervenir, au besoin, plus d'un transpondeur optique 1 par face du conteneur communicant 6 si celui-ci présente une géométrie le nécessitant. La configuration (b) fait intervenir quatre transpondeurs optiques 1 montés sur les quatre angles latéraux du conteneur communicant 6. Cette configuration peut, suivant la géométrie du conteneur communicant 6, faire intervenir plus d'un transpondeur optique 1 par angle.

Selon une configuration, toutes les faces et toutes les arêtes d'un conteneur communiquant 6 peuvent être équipées d'un transpondeur optique 1, y compris la face supérieure et la face inférieure du conteneur communicant 6.

Ces configurations permettent qu'au moins un transpondeur optique 1 d'un conteneur communicant 6 reçoive au moins un signal optique émis sans fil dans l'environnement du conteneur communicant 6.

Le dispositif coordinateur optique 8 coordonne entre eux les transpondeurs optiques 1 quand le conteneur communicant 6 est équipé de plusieurs transpondeurs optiques 1. Le dispositif coordinateur optique 8 peut être également configuré pour alimenter électriquement le ou les transpondeurs optiques 1.

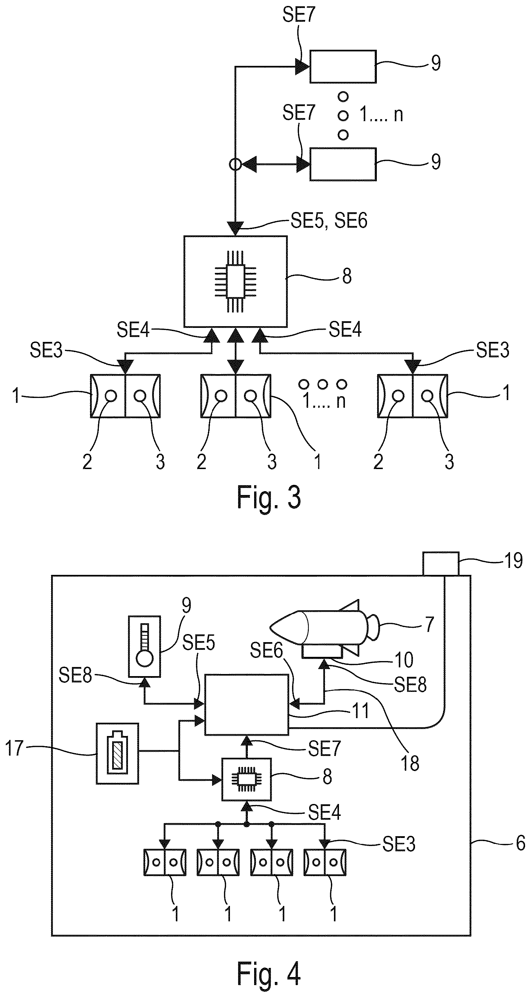

Le dispositif coordinateur 8 comporte une unité de réception 80, une unité de réception 81, une unité d'élaboration 82 et une unité de transmission 83 (figure 3 et figure 4).

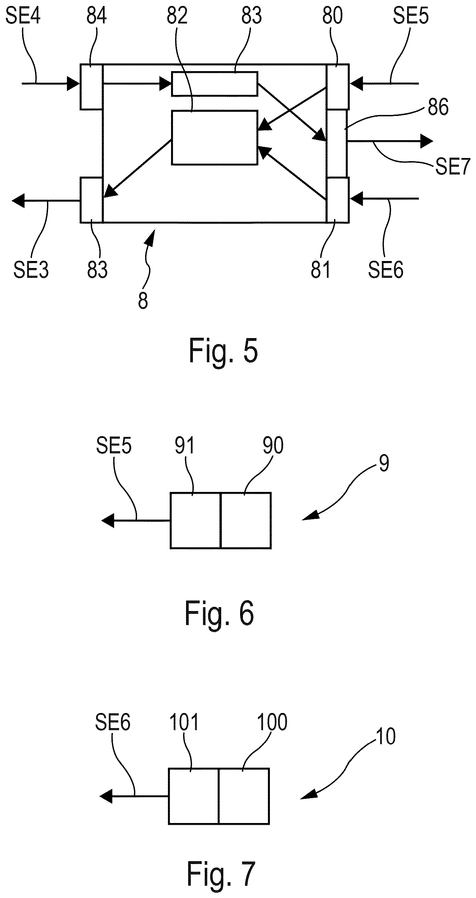

L'unité de réception 80 est configurée pour recevoir au moins un signal électrique SE5 représentatif du ou des premiers paramètres physiques caractérisant un état physique instantané de l'intérieur du conteneur communicant 6 (figure 5).

L'unité de réception 81 est configurée pour recevoir au moins un signal électrique SE6 représentatif du ou des deuxièmes paramètres physiques caractérisant un état physique instantané du ou des dispositifs internes 7 destinés à être contenus dans le conteneur communicant 6.

L'unité de réception 80 et l'unité de réception 81 peuvent recevoir des signaux électriques SE5 et SE6 de plusieurs transpondeurs optiques 1 de plusieurs conteneurs communicants 6.

Dans un mode de réalisation, l'unité de réception 80 et l'unité de réception 81 peuvent être une seule unité de réception configurée, d'une part, pour recevoir au moins un signal électrique SE5 représentatif du ou des premiers paramètres physiques caractérisant un état physique instantané de l'intérieur du conteneur communicant 6 et, d'autre part, pour recevoir au moins un signal électrique SE6 représentatif du ou des deuxièmes paramètres physiques caractérisant un état physique instantané du ou des dispositifs internes 7 destinés à être contenus dans le conteneur communicant 6.

L'unité d'élaboration 82 est configurée pour élaborer le ou les signaux électriques SE3 à partir du ou des signaux électriques SE5 et du ou des signaux électriques SE6.

L'unité de transmission 83 est configurée pour transmettre au ou aux transpondeurs optiques 1 le ou les signaux électriques SE3.

Par ailleurs, le ou les dispositifs coordinateurs optiques 8 peuvent comprendre en outre une unité de réception 84, une unité d'élaboration 85 et une unité de transmission 86.

L'unité de réception 84 est configurée pour recevoir le ou les signaux électriques SE4 du ou des transpondeurs optiques 1.

L'unité d'élaboration 85 est configurée pour élaborer au moins un signal électrique SE7 représentatif du ou des signaux électriques SE4.

L'unité de transmission 86 est configurée pour transmettre au ou aux capteurs 9, 10 le ou les signaux électriques SE7.

Dans un mode de réalisation, l'unité de réception 80, l'unité de réception 81 et l'unité de transmission 86 peuvent être une seule unité interface configurée pour :
- recevoir au moins un signal électrique SE5 représentatif du ou des premiers paramètres physiques caractérisant un état physique instantané de l'intérieur du conteneur communicant 6,
- recevoir au moins un signal électrique SE6 représentatif du ou des deuxièmes paramètres physiques caractérisant un état physique instantané du ou des dispositifs internes 7 destinés à être contenus dans le conteneur communicant 6, et
- transmettre au ou aux capteurs 9, 10 le ou les signaux électriques SE7.

Le conteneur communicant 6 peut aussi comprendre au moins un capteur 9 et un dispositif de surveillance 11. Selon un mode de réalisation, il peut aussi comprendre un capteur 10.

Le ou les capteurs 9 (figure 6) comprennent un module de mesure 90 configuré pour mesurer le ou les premiers paramètres physiques caractérisant un état physique instantané de l'intérieur du conteneur communicant 6 et un module d'élaboration 91 configuré pour élaborer le ou les signaux électriques SE5 représentatifs du ou des premiers paramètres physiques mesurés. De façon non limitative, le ou les capteurs 9 peuvent correspondre à un ou des capteurs de température et/ou à un ou des capteurs de pression et/ou à un ou des capteurs de taux d'humidité.

Dans le cas où le conteneur communicant 6 comprend le capteur 10, le ou les capteurs 10 (figure 7) comprennent un module de mesure 100 configuré pour mesurer le ou les deuxièmes paramètres physiques caractérisant un état physique instantané du ou des dispositifs internes 7 susceptibles d'être contenus dans le conteneur communicant 6 et un module d'élaboration 101 configuré pour élaborer le ou les signaux électriques SE6 représentatifs du ou des deuxièmes paramètres physiques mesurés.

Le dispositif de surveillance 11 comprend au moins une unité de réception 110, une unité de répartition 111, une unité de transmission 112 et une unité de stockage 116.

L'unité de réception 110 est configurée pour recevoir le ou les signaux électriques SE5 et, dans le cas où le conteneur communicant 6 comprend le capteur 10, le ou les signaux électriques SE6.

L'unité de répartition 111 est configurée pour répartir le ou les signaux électriques SE5 et, dans le cas où le conteneur communicant 6 comprend le capteur 10, le ou les signaux électriques SE6.

L'unité de transmission 112 est configurée pour transmettre au ou aux dispositifs coordinateurs optiques 8 le ou les signaux électriques SE5 et, dans le cas où le conteneur communicant 6 comprend le capteur 10, le ou les signaux électriques SE6.

L'unité de stockage 116 est configurée pour stocker les premiers paramètres physiques et/ou les deuxièmes paramètres physiques à partir du ou des signaux électriques SE5 et/ou des signaux électriques SE6, respectivement.

L'unité de répartition 111 configurée pour répartir le ou les signaux électriques SE5 et, dans le cas où le conteneur communicant 6 comprend le capteur 10, le ou les signaux électriques SE6 entre l'unité de transmission 112 et l'unité de stockage 116. Le dispositif de surveillance 11 peut comprendre en outre une unité de réception 113, une unité d'élaboration 114 et une unité de transmission 115.

L'unité de réception 113 est configurée pour recevoir le ou les signaux électriques SE7.

L'unité d'élaboration 114 est configurée pour élaborer au moins un signal électrique SE8 représentatif du ou des signaux électriques SE7.

L'unité de transmission 115 est configurée pour transmettre le ou les signaux électriques SE8 au ou aux capteurs 9, 10.

Le dispositif de surveillance 11 peut également comprendre une unité de surveillance 117. Cette unité de surveillance 117 est configurée pour détecter une anomalie dans les premiers paramètres physiques et/ou les deuxièmes paramètres physiques à partir du ou des signaux électriques SE5 et/ou du ou des signaux électriques SE6. Une anomalie peut correspondre à une augmentation ou une diminution anormale de température ou de pression à l'intérieur du conteneur communicant 6 et/ou du ou des dispositifs internes 7. L'anomalie peut être détectée par l'unité de surveillance 117 par une dérive de température ou de pression (augmentation ou diminution trop rapide de la température ou de la pression par rapport à un seuil).

L'anomalie peut aussi correspondre à une température trop élevée ou trop basse et/ou une pression trop élevée ou trop basse par rapport à un seuil de température. Lorsqu'une anomalie est détectée, l'unité de surveillance peut émettre un signal électrique d'alerte SA à l'unité de stockage 116 capable de stocker un message d'alerte ou directement au ou aux transpondeurs optiques 1.

Le conteneur communicant 6 peut aussi comprendre une alimentation électrique 17 destinée à alimenter le dispositif coordinateur optique 8 et le dispositif de surveillance 11.

Le signal de réveil SR émis par le démodulateur 23 est apte à réveiller le dispositif de surveillance 11 et le dispositif coordinateur optique 8.

Le dispositif de surveillance 11 peut correspondre à un enregistreur de donnée (« datalogger » en anglais), tel qu'un système de surveillance 12 d'état et d'usage du ou des dispositifs internes 7 autrement appeler HUMS (« Health and usage monitoring system » en anglais).

Dans l'exemple de la figure 4, le conteneur communicant 6 est équipé de quatre transpondeurs optiques 1. Les quatre transpondeurs optiques 1 sont synchronisés entre eux par le dispositif coordinateur optique 8 qui synchronise leur fonctionnement. Le dispositif coordinateur optique 8 peut également alimenter électriquement les quatre transpondeurs optiques 1. Le dispositif de surveillance 11 peut mettre à disposition du dispositif coordinateur optique 8 le ou les premiers paramètres physiques et/ou le ou les deuxièmes paramètres physiques stockés dans l'unité de stockage 116. Le dispositif de surveillance 11 peut aussi mettre à disposition du dispositif coordinateur optique 8 le ou les messages d'alerte. Dans la figure 4, le dispositif interne est une munition complexe. La munition complexe est connectée au dispositif de surveillance 11 par un cordon ombilical 18 et met à dispositif du dispositif de surveillance 11 le ou les deuxièmes paramètres physiques caractérisant un état physique instantané de la munition complexe. Parallèlement, le dispositif de surveillance 11 connecté à un capteur 9 correspondant à un thermomètre relève le ou les premiers paramètres physiques de l'intérieur du conteneur communicant 6, en particulier la température.

De façon non limitative, le protocole optique codant la communication à l'aide des signaux lumineux SL1 et SL2 entre le ou les transpondeurs optiques 1 et les stations de base optiques 13 peut être conçu de manière à limiter les collisions de trame lorsque plusieurs transpondeurs optiques 1 émettent un signal lumineux SL1 vers une même station de base optique 13 en même temps (du fait de la transmission sans fil des signaux lumineux). À ce titre, chaque signal lumineux SL1 transmis à une station de base optique 13 peut entraîner un signal lumineux représentatif d'un accusé de réception en retour. L'absence de ce signal lumineux d'accusé de réception peut démontrer que la communication n'a pas abouti, incluant une possible collision de trames. Les trames peuvent être codées sur un rapport cyclique court pour limiter la collision. Le système dialogue en modulation de fréquence des signaux lumineux SL1 et SL2, la porteuse pouvant être déterminée de manière à être compatible au débit de réception du ou des stations de base optiques 13 ainsi que des différentes fréquences propres des sources de pollution lumineuses (éclairages type néon en premier lieu).

Lorsqu'un conteneur communicant 6 dialogue avec une station de base optique 13, il privilégiera l'usage du transpondeur optique 1 le plus efficient. Avantageusement, afin d'économiser l'énergie disponible dans l'alimentation électrique 17, seul le transpondeur optique 1 situé au moins dans la couverture de réception de signaux lumineux SL1 d'une station de base optique 13 peut être utilisé pour une communication.

Le système de communication 16 peut être utilisé dans différentes applications.

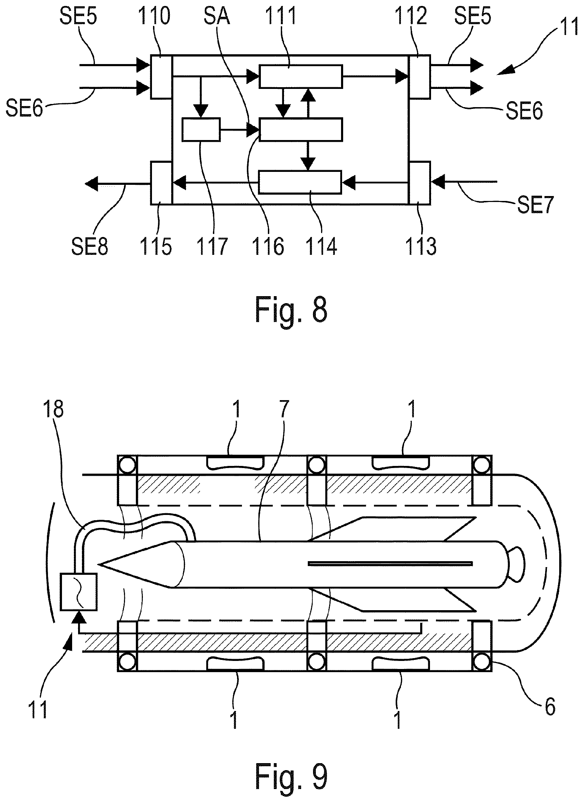

Dans un premier exemple, il peut être utilisé dans le cas de conteneur communicant 6 utilisé comme conteneur pour banc d'essai avec journal de bord automatisé, tel qu'un journal de bord électronique (« electronic logbook » ou « e-Logbook » en anglais). Le conteneur communicant 6 peut correspondre à celui représenté sur la figure 9. Le dispositif interne 7 correspond à une munition complexe installée dans le conteneur communicant 6. Dans cet exemple, le système de communication 16 est capable de remonter des données de diagnostic régulièrement permettant de constater une dérive des performances opérationnelles de la munition complexe ou tout simplement de manière à remplir automatiquement un journal de bord de la munition complexe. Ce type de scénario peut se présenter dans le cas de munitions complexes embarquées à bord d'un aéronef. Le recensement des impacts sur la munition complexe causés par les mouvements de l'aéronef tel qu'un atterrissage peut être un facteur déterminant de la fatigue mécanique de la munition complexe. Une fois installée dans un conteneur communicant 6 et remisée, la munition complexe peut être connectée au dispositif de surveillance 11 du conteneur communicant 6 par un cordon ombilical 18. Le ou les transpondeurs optiques 1 communiquent avec le système de surveillance 12 qui remonte les informations, en particulier les impacts recensés, enregistrées en vol par la munition complexe au dispositif utilisateur 15.

Dans un deuxième exemple, le système de communication 16 peut être utilisé dans le cas de conteneurs communicants 6 aptes à alerter des fuites. Afin de mieux protéger certains dispositifs internes 7 tels que des munitions complexes de leurs conditions de stockage, les conteneurs communicants 6 sont pressurisés de manière à éviter à l'humidité et aux particules de pénétrer dans le conteneur communicant 6. Cette pression a tendance à diminuer au fil du temps en raison de la légère fuite structurelle du conteneur communicant 6, ce qui conduit les opérateurs à refaire l'appoint occasionnellement. Une fuite qui surviendrait à l'insu de l'opérateur pouvant exposer le produit à des conditions de stockage rarement idéales et pouvant compromettre la performance opérationnelle de la munition communicants 6. Dans cet exemple, le conteneur communicant 6 est configuré conformément à la figure 4 dans laquelle le capteur 9 correspond à un capteur de pression. Les données de pression sont enregistrées par le dispositif de surveillance 11 (dans l'unité de stockage 116). Un signal d'alerte SA est émis dès lors que l'unité de surveillance 117 déterminera que le niveau de pression mesurée par le capteur de pression 9 passe en dessous d'un certain seuil. Le ou les transpondeurs optiques 1 communiquent avec le système de surveillance 12 qui remonte le signal d'alerte SA au dispositif utilisateur 15.

Dans un deuxième exemple, le système de communication 16 peut être utilisé pour retrouver rapidement un conteneur communicant 6 parmi plusieurs conteneurs communicants 6. Dans cet exemple, le conteneur communicant 6 est doté d'au moins une diode électroluminescente 19 configurée pour émettre une lumière dans le spectre visible, sur une couleur fortement visible à l'œil (par exemple une teinte sélectionnée dans les verts). L'opérateur souhaitant rapidement identifier un conteneur communicant 6 le sélectionne via un système d'information du dispositif utilisateur 15 qui par le relais du système de surveillance 12 va informer le conteneur communicant 6 concerné de cette demande d'identification. Le conteneur communicant 6 fait alors clignoter sa ou ses diodes électroluminescentes 19 visibles de manière à indiquer rapidement sa position à l'utilisateur.

L'utilisation de signaux lumineux permet d'éviter l'induction de courants électriques par voie radiofréquence dans une partie d'un dispositif pyrotechnique, tel qu'un détonateur.

## Revendications

1. Transpondeur optique (1) destiné à contribuer à une surveillance d'un état d'au moins un dispositif interne contenu dans un conteneur communicant susceptible d'être équipé dudit transpondeur optique, la surveillance étant susceptible d'être mise en œuvre par un système de surveillance, le transpondeur comportant au moins :
- un élément de réception (2) configuré pour recevoir au moins un premier signal lumineux (SL1) sans fil provenant d'un système de communication optique (16) et pour émettre au moins un premier signal électrique (SE1) qui est représentatif du ou des premiers signaux lumineux (SL1), le ou les premiers signaux lumineux (SL1) étant représentatifs d'au moins un ordre de commande,
- un élément d'émission (3) configuré pour recevoir au moins un deuxième signal électrique (SE2) et pour émettre au moins un deuxième signal lumineux (SL2) sans fil qui est représentatif du ou des deuxièmes signaux électriques (SE2), le ou les deuxièmes signaux lumineux (SL2) étant destinés à être transmis par l'élément d'émission (3) au système de communication optique (16),
- une unité de contrôle (4) comprenant :
∘ un premier module de réception (40) configuré pour recevoir le ou les premiers signaux électriques (SE1) provenant de l'élément de réception (2),
∘ un deuxième module de réception (41) configuré pour recevoir d'au moins capteur (9, 10) logé dans le conteneur communicant (6) au moins un troisième signal électrique (SE3) représentatif au moins d'un premier paramètre physique caractérisant un état physique instantané de l'intérieur du conteneur communicant (6) et/ou d'un deuxième paramètre physique caractérisant un état physique instantané du ou des dispositifs internes (7) destinés à être contenus dans le conteneur communicant (6),
∘ un premier module d'élaboration (43) configuré pour élaborer le ou les deuxièmes signaux électriques (SE2) représentatifs du ou des troisièmes **signaux** électriques (SE3) en fonction du ou des premiers signaux électriques (SE1),
∘ un premier module de transmission (42) configuré pour transmettre le ou les deuxièmes signaux électriques (SE2) à l'élément d'émission (3) ;
l'élément de réception (2) comprenant en outre un premier démodulateur (23) configuré pour traduire le ou les premiers signaux électriques (SE1) élaborés par la photodiode (22) afin qu'ils soient exploitables par l'unité de contrôle (4), l'élément d'émission (3) comprenant en outre un deuxième modulateur (33) configuré pour traduire le ou les deuxièmes signaux électriques (SE2) élaborés par l'unité de contrôle (4) afin qu'ils soient exploitables par la diode électroluminescente (30) le premier démodulateur (23) étant configuré pour transmettre le ou les premiers signaux électriques (SE1) traduits à l'unité de contrôle (4) et réveiller l'unité de contrôle (4) si l'ordre de commande comprend un préambule prédéterminé.

2. Transpondeur selon la revendication 1,
**caractérisé en ce que** l'unité de contrôle (4) comprend en outre :
- un deuxième module d'élaboration (44) configuré pour élaborer au moins un quatrième signal électrique (SE4) représentatif du ou des premiers signaux électriques (SE1),
- un deuxième module de transmission (45) configuré pour transmettre au ou aux capteurs (9, 10) logés dans le conteneur communicant (6) le ou les quatrièmes signaux électriques (SE4).

3. Transpondeur selon l'une quelconque des revendications 1 et 2,
**caractérisé en ce que** l'élément de réception (2) correspond à un premier transducteur comprenant :
- une lentille de collection (20) agencée pour recevoir le ou les premiers signaux lumineux (SL1) selon un angle d'ouverture prédéterminé de la lentille de collection (20),
- un premier filtre optique (21) configuré pour filtrer le ou les premiers signaux lumineux (SL1) reçus par la lentille de collection (20), le premier filtre optique (21) étant configuré pour bloquer des fréquences du ou des premiers signaux lumineux (SL1) hors d'une plage de fréquences prédéterminée,
- une photodiode (22) agencée pour recevoir le ou les premiers signaux lumineux (SL1) filtrés par le premier filtre optique (21) et apte à élaborer le ou les premiers signaux électriques (SE1) et à transmettre le ou les premiers signaux électriques (SE1) à l'unité de contrôle (4) ;
l'élément d'émission (3) correspondant à un deuxième transducteur comprenant une diode électroluminescente (32) agencée pour recevoir le ou les deuxièmes signaux électriques (SE2), la diode électroluminescente (32) étant apte à élaborer et émettre le ou les deuxièmes signaux lumineux (SL2) qui sont représentatifs du ou des deuxièmes signaux électriques (SE2).

4. Transpondeur selon l'une quelconque des revendications 1 à 3,
**caractérisé en ce que** l'élément d'émission (3) comprend en outre :
- un deuxième filtre optique (31) configuré pour filtrer le ou les deuxièmes signaux lumineux (SL2), le deuxième filtre optique (31) étant configuré pour bloquer des fréquences du ou des deuxièmes signaux lumineux (SL2) hors d'une plage de fréquences prédéterminée,
- une lentille d'émission (30) configurée pour émettre le ou les deuxièmes signaux lumineux (SL2) filtrés par le deuxième filtre optique (31).

5. Transpondeur selon l'une quelconque des revendications 1 et 2,
**caractérisé en ce qu'**il comprend en outre :
- une lentille de collection (38) agencée pour recevoir le ou les premiers signaux lumineux (SL1),
- un premier filtre optique (36) configuré pour filtrer le ou les premiers signaux lumineux (SL1) reçus par la lentille de collection (38), le premier filtre optique (36) étant configuré pour bloquer des fréquences du ou des premiers signaux lumineux (SL1) hors d'une plage de fréquences prédéterminée,
- une lentille séparatrice (39) configurée pour séparer le ou les premiers signaux lumineux (SL1) en deux signaux lumineux secondaires (SL11, SL12) ;
**en ce que** l'élément d'émission (3) comprend :
- **un réflecteur** (34) configuré pour réfléchir un premier signal secondaire (SL11) des deux signaux lumineux secondaires (SL11, SL12),
- un volet (35) configuré pour se trouver alternativement dans une position de fermeture dans laquelle le volet (35) empêche le premier signal lumineux secondaire (SL11) d'atteindre le réflecteur (34) et dans une position d'ouverture dans laquelle le volet (35) laisse le premier signal lumineux secondaire (SL11) atteindre le réflecteur (34) ;
et **en ce que** l'élément de réception (2) comprend :
- une photodiode (37) agencée pour recevoir un deuxième signal lumineux secondaire (SL12) des deux signaux lumineux secondaires (SL11, SL12) et apte à élaborer le ou les premiers signaux électriques (SE1) et à transmettre le ou les premiers signaux électriques (SE1) à l'unité de contrôle (4).

6. Transpondeur selon la revendication 5,
**caractérisé en ce qu'**il comprend en outre :
- une unité de traitement (394) configurée pour transmettre à l'unité de contrôle (4) le ou les premiers signaux électriques (SE1) et pour recevoir le ou les deuxièmes signaux électrique (SE2) de l'unité de contrôle (4),
- une unité de réveil (393) configurée pour :
∘ recevoir le ou les premiers signaux électriques (SE1),
∘ élaborer un signal électrique de réveil (SE12) destiné à être transmis à l'unité de traitement (394) si elle détecte une séquence d'impulsions prédéterminée dans le ou les premiers signaux électriques (SE1),
- une unité de transmission (392) configuré pour recevoir le ou les premiers signaux électriques (SE1) élaborés par la photodiode (37) et transmettre le ou les premiers signaux électriques (SE1) ;
l'unité de traitement (394) étant apte à recevoir le ou les premiers signaux électriques (SE1) de l'unité de transmission (392) si l'unité de traitement (394) a reçu le signal électrique de réveil (SE12).

7. Transpondeur selon l'une quelconque des revendications 5 et 6,
**caractérisé en ce que** l'unité de traitement (394) est apte à transmettre au volet (35) un signal électrique de commande de volet (SE21), le signal électrique de commande de volet (SE21) étant apte à commander au volet (35) d'être alternativement dans la position d'ouverture et dans la position de fermeture en fonction du ou des deuxièmes signaux électriques (SE2) pour que le ou les deuxièmes signaux lumineux (SL2) soient représentatifs du ou des deuxièmes signaux électriques (SE2).

8. Conteneur communicant susceptible de recevoir au moins un dispositif interne,
**caractérisé en ce qu'**il comprend au moins un transpondeur optique (1) selon l'une quelconque des revendications 1 à 7.

9. Conteneur selon la revendication 8,
**caractérisé en ce qu'**il comprend en outre :
- au moins un dispositif coordinateur optique (8) comportant :
∘ une première unité de réception (80) configurée pour recevoir au moins un cinquième signal électrique (SE5) représentatif au moins d'un premier paramètre physique caractérisant un état physique instantané de l'intérieur du conteneur communicant (6),
∘ une deuxième unité de réception (81) configurée pour recevoir au moins un sixième signal électrique (SE6) représentatif au moins d'un deuxième paramètre physique caractérisant un état physique instantané du ou des dispositifs internes (7) contenus dans le conteneur communicant (6),
∘ une première unité d'élaboration (82) configurée pour élaborer le ou les troisièmes signaux électriques (SE3) à partir du ou des quatrièmes signaux électriques (SE4) et du ou des cinquièmes signaux électriques (SE5),
∘ une première unité de transmission (83) configurée pour transmettre au ou aux transpondeurs optiques (1) le ou les troisièmes signaux électriques (SE3).

10. **Conteneur** selon l'une quelconque des revendications 8 et 9,
**caractérisé en ce que** le ou les dispositifs coordinateurs optiques (8) comprennent en outre :
- une troisième unité de réception (84) configurée pour recevoir le ou les quatrièmes signaux électriques (SE4) du ou des transpondeurs optiques (1),
- une deuxième unité d'élaboration (85) configurée pour élaborer au moins un septième signal électrique (SE7) représentatif du ou des quatrièmes signaux électriques (SE4),
- une deuxième unité de transmission (86) configurée pour transmettre au ou aux capteurs (9, 10) le ou les septièmes signaux électriques (SE7).

11. Conteneur selon l'une quelconque des revendications 8 à 10,
**caractérisé en ce qu'**il comprend en outre :
- au moins un premier capteur (9) comprenant :
∘ un premier module de mesure (90) configuré pour mesurer au moins un premier paramètre physique caractérisant un état physique instantané de l'intérieur du conteneur communicant (6) et
∘ un premier module d'élaboration (91) configuré pour élaborer le ou les cinquièmes signaux électriques (SE5) représentatifs du ou des premiers paramètres physiques mesurés ;
- un deuxième capteur (10) comprenant :
∘ un deuxième module de mesure (100) configuré pour mesurer au moins un deuxième paramètre physique caractérisant un état physique instantané du ou des dispositifs internes (7) contenus dans le conteneur communicant (6),
∘ un deuxième module d'élaboration (101) configuré pour élaborer le ou les sixièmes signaux électriques (SE6) représentatifs du ou des deuxièmes paramètres physiques mesurés ;
- un dispositif de surveillance (11) comprenant :
∘ une quatrième unité de réception (110) configurée pour recevoir le ou les cinquièmes signaux électriques (SE5) et le ou les sixièmes signaux électriques (SE6),
∘ une deuxième unité de transmission (112) configurée pour transmettre au ou aux dispositifs coordinateurs optiques (8) le ou les cinquièmes signaux électriques (SE5) et le ou les sixièmes signaux électriques (SE6),
∘ une unité de stockage (116) configurée pour stocker les premiers paramètres physiques et/ou les deuxièmes paramètres physiques à partir du ou des signaux électriques (SE5) et/ou des signaux électriques (SE6), respectivement,
∘ une unité de répartition (111) configurée pour répartir le ou les cinquièmes signaux électriques (SE5) et le ou les sixièmes signaux électriques (SE6) entre la deuxième unité de transmission (112) et l'unité de stockage (116),
∘ une unité de surveillance (117) configurée pour détecter une anomalie dans les premiers paramètres physiques et/ou les deuxièmes paramètres physiques à partir du ou des signaux électriques (SE5) et/ou du ou des signaux électriques (SE6) et configurée pour émettre un signal électrique d'alerte (SA) si une anomalie est détectée.

12. Conteneur selon la revendication 11,
**caractérisé en ce que** le dispositif de surveillance (11) comprend en outre :
- une cinquième unité de réception (113) configurée pour recevoir le ou les septièmes signaux électriques (SE7),
- une troisième unité d'élaboration (114) configurée pour élaborer au moins un huitième signal électrique (SE8) représentatif du ou des septièmes signaux électriques (SE7),
- une troisième unité de transmission (115) configurée pour transmettre le ou les huitièmes signaux électriques (SE8) au ou aux capteurs (9, 10).

13. Système de communication destiné à contribuer à une surveillance d'un état d'au moins un dispositif interne,
**caractérisé en ce qu'**il comprend :
- au moins un conteneur communicant (6) selon l'une quelconque des revendications 8 à 12, le ou les conteneurs communicant (6) étant destinés à contenir le ou les dispositifs internes (7),
- un système de surveillance (12) contribuant à la surveillance du ou des premiers paramètres physiques caractérisant un état physique instantané de l'intérieur du conteneur communicant (6) et/ou du ou des deuxièmes paramètres physiques caractérisant un état physique instantané du ou des dispositifs internes (7) contenus dans le conteneur communicant (6), le système de surveillance (12) comportant au moins un transpondeur de surveillance (132) configuré pour recevoir la ou les deuxièmes signaux lumineux (SL2) émis par le ou les transpondeurs optiques (1) du ou des conteneurs communicants (6).

14. Système selon la revendication 13,
**caractérisé en ce que** le système de surveillance (12) comprend au moins une station de base optique (13) et un concentrateur (14),
la ou les stations de base optiques (13) comprenant le ou les transpondeurs de surveillance (132),
le ou les transpondeurs de surveillance (132) comportant au moins un premier transducteur de surveillance (130) configuré pour recevoir au moins le ou les deuxièmes signaux lumineux (SL2) émis par au moins un transpondeur optique (1) d'au moins un conteneur communicant (6) et pour émettre au moins un huitième signal électrique (SE8) qui est représentatif du ou des deuxièmes signaux lumineux (SL2) ;
le concentrateur (14) comprenant :
- une première unité de réception (140) configurée pour recevoir la ou les huitièmes signaux électriques (SE8) émis par la ou les stations de base optiques (13),
- une première unité d'élaboration (141) configurée pour élaborer au moins un neuvième signal électrique (SE9) à partir du ou des huitièmes signaux électriques (SE8),
- une première unité de transmission (142) configurée pour transmettre le ou les neuvièmes signaux électriques (SE9) à un dispositif utilisateur (15).

15. Système selon la revendication 14,
**caractérisé en ce que** le ou les transpondeurs de surveillance (132) de la ou les stations de base optiques (13) comprennent en outre :
- un deuxième transducteur de surveillance (131) configuré pour recevoir au moins un dixième signal électrique (SE10) du concentrateur (14) et pour émettre le ou les premiers signaux lumineux (SL1) à au moins un transpondeur optique (1) d'au moins un conteneur communicant (6) ;
le concentrateur (14) comprenant en outre :
- une deuxième unité de réception (143) configurée pour recevoir au moins un onzième signal électrique (SE11) du dispositif utilisateur (15),
- une deuxième unité d'élaboration (144) configurée pour élaborer le ou les dixièmes signaux électriques (SE10) à partir du ou des onzièmes signaux électriques (SE11),
- une deuxième unité de transmission (145) configurée pour transmettre le ou les dixièmes signaux électriques (SE10) au ou aux stations de base optiques (13).

16. Système selon la revendication 13,
**caractérisé en ce que** le ou les transpondeurs de surveillance (132) du système de surveillance (12) comportent au moins un premier transducteur de surveillance (130) configuré pour recevoir au moins le ou les deuxièmes signaux lumineux (SL2) émis par au moins un transpondeur optique (1) d'au moins un conteneur communicant (6) et pour émettre au moins un huitième signal électrique (SE8) qui est représentatif du ou des deuxièmes signaux lumineux (SL2),
le système de surveillance (12) comportant en outre une unité d'information (133) configurée pour informer un utilisateur du ou des premiers paramètres physiques et/ou du ou des deuxièmes paramètres physiques à partir du ou des huitièmes signaux électriques (SE8).

17. Système selon la revendication 16,
**caractérisé en ce que** le ou les transpondeurs de surveillance (132) comportent en outre :
- un élément de commande (134) configuré pour transmettre au moins un dixième signal électrique (SE10) représentatif d'au moins un ordre de commande, l'ordre de commande correspondant à une demande de transmission du ou des premiers paramètres physiques et/ou du ou des deuxièmes paramètres physiques,
- un deuxième transducteur de surveillance (131) configuré pour recevoir le ou les dixièmes signaux électriques (SE10) de l'élément de commande (134) et pour émettre le ou les premiers signaux lumineux (SL1) à au moins un transpondeur optique (1) d'au moins un conteneur communicant (6).

## Patentansprüche

1. Optischer Transponder (1), der dazu bestimmt ist, zu einer Überwachung eines Zustands mindestens einer inneren Vorrichtung beizutragen, die in einem kommunizierenden Behälter enthalten ist, der mit dem optischen Transponder ausgestattet werden kann, wobei die Überwachung durch ein Überwachungssystem erfolgen kann, wobei der Transponder mindestens umfasst:
- ein Empfangselement (2), das so ausgelegt ist, dass es mindestens ein erstes drahtloses Lichtsignal (SL1) empfängt, welches von einem optischen Kommunikationssystem (16) stammt, und mindestens ein erstes elektrisches Signal (SE1) sendet, das für das oder die ersten Lichtsignale (SL1) repräsentativ ist, wobei das oder die ersten Lichtsignale (SL1) für mindestens einen Ansteuerbefehl repräsentativ sind,
- ein Sendeelement (3), das so ausgelegt ist, dass es mindestens ein zweites elektrisches Signal (SE2) empfängt und mindestens ein zweites drahtloses Lichtsignal (SL2) sendet, das für das oder die zweiten elektrischen Signale (SE2) repräsentativ ist, wobei das oder die zweiten Lichtsignale (SL2) dazu bestimmt sind, von dem Sendeelement (3) an das optische Kommunikationssystem (16) übertragen zu werden,
- eine Steuereinheit (4), welche umfasst:
∘ ein erstes Empfangsmodul (40), das so ausgelegt ist, dass es das oder die von dem Empfangselement (2) stammenden ersten elektrischen Signale (SE1) empfängt,
∘ ein zweites Empfangsmodul (41), das so ausgelegt ist, dass es von mindestens einem in dem kommunizierenden Behälter (6) untergebrachten Sensor (9, 10) mindestens ein drittes elektrisches Signal (SE3) empfängt, das für mindestens einen ersten physikalischen Parameter, der einen momentanen physikalischen Zustand des Inneren des kommunizierenden Behälters (6) charakterisiert, und/oder einen zweiten physikalischen Parameter repräsentativ ist, der einen momentanen physikalischen Zustand der inneren Vorrichtung(en) (7), die dazu bestimmt sind, in dem kommunizierenden Behälter (6) enthalten zu sein, charakterisiert,
∘ ein erstes Erzeugungsmodul (43), das so ausgelegt ist, dass es das oder die zweiten elektrischen Signale (SE2), die für das oder die dritten elektrischen Signale (SE3) repräsentativ sind, in Abhängigkeit von dem oder den ersten elektrischen Signalen (SE1) erzeugt,
∘ ein erstes Übertragungsmodul (42), das so ausgelegt ist, dass es das oder die zweiten elektrischen Signale (SE2) an das Sendeelement (3) überträgt;
wobei das Empfangselement (2) weiter einen ersten Demodulator (23) umfasst, der so ausgelegt ist, dass er das oder die von der Fotodiode (22) erzeugten ersten elektrischen Signale (SE1) umwandelt, sodass sie von der Steuereinheit (4) genutzt werden können, wobei das Sendeelement (3) weiter einen zweiten Modulator (33) umfasst, der so ausgelegt ist, dass er das oder die von der Steuereinheit (4) erzeugten zweiten elektrischen Signale (SE2) umwandelt, sodass sie von der Leuchtdiode (30) genutzt werden können, wobei der erste Demodulator (23) so ausgelegt ist, dass er das oder die umgewandelten ersten elektrischen Signale (SE1) an die Steuereinheit (4) überträgt und die Steuereinheit (4) aufweckt, wenn der Ansteuerbefehl eine vorbestimmte Präambel umfasst.

2. Transponder nach Anspruch 1,
**dadurch gekennzeichnet, dass** die Steuereinheit (4) weiter umfasst:
- ein zweites Erzeugungsmodul (44), das so ausgelegt ist, dass es mindestens ein viertes elektrisches Signal (SE4) erzeugt, das für das oder die ersten elektrischen Signale (SE1) repräsentativ ist,
- ein zweites Übertragungsmodul (45), das so ausgelegt ist, dass es das oder die vierten elektrischen Signale (SE4) an den oder die in dem kommunizierenden Behälter (6) untergebrachten Sensoren (9, 10) überträgt.

3. Transponder nach einem der Ansprüche 1 und 2,
**dadurch gekennzeichnet, dass** das Empfangselement (2) einem ersten Wandler entspricht, welcher umfasst:
- eine Sammellinse (20), die so angeordnet ist, dass sie das oder die ersten Lichtsignale (SL1) unter einem vorbestimmten Öffnungswinkel der Sammellinse (20) empfängt,
- ein erstes optisches Filter (21), das so ausgelegt ist, dass es das oder die von der Sammellinse (20) empfangenen ersten Lichtsignale (SL1) filtert, wobei das erste optische Filter (21) so ausgelegt ist, dass es Frequenzen des oder der ersten Lichtsignale (SL1) außerhalb eines vorbestimmten Frequenzbereichs sperrt,
- eine Fotodiode (22), die so angeordnet ist, dass sie das oder die von dem ersten optischen Filter (21) gefilterten ersten Lichtsignale (SL1) empfängt, und in der Lage ist, das oder die ersten elektrischen Signale (SE1) zu erzeugen und das oder die ersten elektrischen Signale (SE1) an die Steuereinheit (4) zu übertragen;
wobei das Sendeelement (3) einen zweiten Wandler entspricht, der eine Leuchtdiode (32) umfasst, die so angeordnet ist, dass sie das oder die zweiten elektrischen Signale (SE2) empfängt, wobei die Leuchtdiode (32) in der Lage ist, das oder die zweiten Lichtsignale (SL2), die für das oder die zweiten elektrischen Signale (SE2) repräsentativ sind, zu erzeugen und zu senden.

4. Transponder nach einem der Ansprüche 1 bis 3,
**dadurch gekennzeichnet, dass** das Sendeelement (3) weiter umfasst:
- ein zweites optisches Filter (31), das so ausgelegt ist, dass es das oder die zweiten Lichtsignale (SL2) filtert, wobei das zweite optische Filter (31) so ausgelegt ist, dass es Frequenzen des oder der zweiten Lichtsignale (SL2) außerhalb eines vorbestimmten Frequenzbereichs sperrt,
- eine Sendelinse (30), die so ausgelegt ist, dass sie das oder die von dem zweiten optischen Filter (31) gefilterten zweiten Lichtsignale (SL2) sendet.

5. Transponder nach einem der Ansprüche 1 und 2,
**dadurch gekennzeichnet, dass** er weiter umfasst:
- eine Sammellinse (38), die so angeordnet ist, dass sie das oder die ersten Lichtsignale (SL1) empfängt,
- ein erstes optisches Filter (36), das so ausgelegt ist, dass es das oder die von der Sammellinse (38) empfangenen ersten Lichtsignale (SL1) filtert, wobei das erste optische Filter (36) so ausgelegt ist, dass es Frequenzen des oder der ersten Lichtsignale (SL1) außerhalb eines vorbestimmten Frequenzbereichs sperrt,
- eine Streulinse (39), die so ausgelegt ist, dass sie das oder die ersten Lichtsignale (SL1) in zwei sekundäre Lichtsignale (SL11, SL12) streut;
dass das Sendeelement (3) umfasst:
- einen Reflektor (34), der so ausgelegt ist, dass er ein erstes sekundäres Signal (SL11) der zwei sekundären Lichtsignale (SL11, SL12) reflektiert,
- eine Klappe (35), die so ausgelegt ist, dass sie sich abwechselnd in einer Schließstellung, in der die Klappe (35) verhindert, dass das erste sekundäre Lichtsignal (SL11) den Reflektor (34) erreicht, und in einer Öffnungsstellung befindet, in der die Klappe (35) das erste sekundäre Lichtsignal (SL11) den Reflektor (34) erreichen lässt;
und dass das Empfangselement (2) umfasst:
- eine Fotodiode (37), die so angeordnet ist, dass sie ein zweites sekundäres Lichtsignal (SL12) der zwei sekundären Lichtsignale (SL11, SL12) empfängt, und in der Lage ist, das oder die ersten elektrischen Signale (SE1) zu erzeugen und das oder die ersten elektrischen Signale (SE1) an die Steuereinheit (4) zu übertragen.

6. Transponder nach Anspruch 5,
**dadurch gekennzeichnet, dass** er weiter umfasst:
- eine Verarbeitungseinheit (394), die so ausgelegt ist, dass sie das oder die ersten elektrischen Signale (SE1) an die Steuereinheit (4) überträgt und das oder die zweiten elektrischen Signale (SE2) von der Steuereinheit (4) empfängt,
- eine Weckeinheit (393), die so ausgelegt ist, dass sie:
∘ das oder die ersten elektrischen Signale (SE1) empfängt,
∘ ein elektrisches Wecksignal (SE12) erzeugt, das dazu bestimmt ist, an die Verarbeitungseinheit (394) übertragen zu werden, wenn sie in dem oder den ersten elektrischen Signalen (SE1) eine vorbestimmte Impulsfolge erkennt,
- eine Übertragungseinheit (392), die so ausgelegt ist, dass sie das oder die von der Fotodiode (37) erzeugten ersten elektrischen Signale (SE1) empfängt und das oder die ersten elektrischen Signale (SE1) überträgt;
wobei die Verarbeitungseinheit (394) in der Lage ist, das oder die ersten elektrischen Signale (SE1) von der Übertragungseinheit (392) zu empfangen, wenn die Verarbeitungseinheit (394) das elektrische Wecksignal (SE12) empfangen hat.

7. Transponder nach einem der Ansprüche 5 und 6,
**dadurch gekennzeichnet, dass** die Verarbeitungseinheit (394) in der Lage ist, ein elektrisches Klappenansteuersignal (SE21) an die Klappe (35) zu übertragen, wobei das elektrische Klappenansteuersignal (SE21) in der Lage ist, die Klappe (35) in Abhängigkeit von dem oder den zweiten elektrischen Signalen (SE2) so anzusteuern, dass sie sich abwechselnd in der Öffnungsstellung und in der Schließstellung befindet, damit das oder die zweiten Lichtsignale (SL2) für das oder die zweiten elektrischen Signale (SE2) repräsentativ sind.

8. Kommunizierender Behälter, der mindestens eine innere Vorrichtung aufnehmen kann,
**dadurch gekennzeichnet, dass** er mindestens einen optischen Transponder (1) nach einem der Ansprüche 1 bis 7 umfasst.

9. Behälter nach Anspruch 8,
**dadurch gekennzeichnet, dass** er weiter umfasst:
- mindestens eine optische Koordinatorvorrichtung (8), welche umfasst:
∘ eine erste Empfangseinheit (80), die so ausgelegt ist, dass sie mindestens ein fünftes elektrisches Signal (SE5) empfängt, das für mindestens einen ersten physikalischen Parameter repräsentativ ist, der einen momentanen physikalischen Zustand des Inneren des kommunizierenden Behälters (6) charakterisiert,
∘ eine zweite Empfangseinheit (81), die so ausgelegt ist, dass sie mindestens ein sechstes elektrisches Signal (SE6) empfängt, das für mindestens einen zweiten physikalischen Parameter repräsentativ ist, der einen momentanen physikalischen Zustand der in dem kommunizierenden Behälter (6) enthaltenen inneren Vorrichtung(en) (7) charakterisiert,
∘ eine erste Erzeugungseinheit (82), die so ausgelegt ist, dass sie das oder die dritten elektrischen Signale (SE3) auf Grundlage des oder der vierten elektrischen Signale (SE4) und des oder der fünften elektrischen Signale (SE5) erzeugt,
∘ eine erste Übertragungseinheit (83), die so ausgelegt ist, dass sie das oder die dritten elektrischen Signale (SE3) an den oder die optischen Transponder (1) überträgt.

10. Behälter nach einem der Ansprüche 8 und 9,
**dadurch gekennzeichnet, dass** die optische(n) Koordinatorvorrichtung(en) (8) weiter umfassen:
- eine dritte Empfangseinheit (84), die so ausgelegt ist, dass sie das oder die vierten elektrischen Signale (SE4) von dem oder den optischen Transpondern (1) empfängt,
- eine zweite Erzeugungseinheit (85), die so ausgelegt ist, dass sie mindestens ein siebtes elektrisches Signal (SE7) erzeugt, das für das oder die vierten elektrischen Signale (SE4) repräsentativ ist,
- eine zweite Übertragungseinheit (86), die so ausgelegt ist, dass sie das oder die siebten elektrischen Signale (SE7) an den oder die Sensoren (9, 10) überträgt.

11. Behälter nach einem der Ansprüche 8 bis 10,
**dadurch gekennzeichnet, dass** er weiter umfasst:
- mindestens einen ersten Sensor (9), welcher umfasst:
∘ ein erstes Messmodul (90), das so ausgelegt ist, dass es mindestens einen ersten physikalischen Parameter misst, der einen momentanen physikalischen Zustand des Inneren des kommunizierenden Behälters (6) charakterisiert, und
∘ ein erstes Erzeugungsmodul (91), das so ausgelegt ist, dass es das oder die fünften elektrischen Signale (SE5) erzeugt, die für den oder die gemessenen ersten physikalischen Parameter repräsentativ sind;
- einen zweiten Sensor (10), welcher umfasst:
∘ ein zweites Messmodul (100), das so ausgelegt ist, dass es mindestens einen zweiten physikalischen Parameter misst, der einen momentanen physikalischen Zustand der in dem kommunizierenden Behälter (6) enthaltenen inneren Vorrichtung(en) (7) charakterisiert,
∘ ein zweites Erzeugungsmodul (101), das so ausgelegt ist, dass es das oder die sechsten elektrischen Signale (SE6) erzeugt, die für den oder die gemessenen zweiten physikalischen Parameter repräsentativ sind;
- eine Überwachungsvorrichtung (11), welche umfasst:
∘ eine vierte Empfangseinheit (110), die so ausgelegt ist, dass sie das oder die fünften elektrischen Signale (SE5) und das oder die sechsten elektrischen Signale (SE6) empfängt,
∘ eine zweite Übertragungseinheit (112), die so ausgelegt ist, dass sie das oder die fünften elektrischen Signale (SE5) und das oder die sechsten elektrischen Signale (SE6) an die optische(n) Koordinatorvorrichtung(en) (8) überträgt,
∘ eine Speichereinheit (116), die so ausgelegt ist, dass sie die ersten physikalischen Parameter und/oder die zweiten physikalischen Parameter auf Grundlage des oder der elektrischen Signale (SE5) bzw. der elektrischen Signale (SE6) speichert,
∘ eine Weitergabeeinheit (111), die so ausgelegt ist, dass sie das oder die fünften elektrischen Signale (SE5) und das oder die sechsten elektrischen Signale (SE6) zwischen der zweiten Übertragungseinheit (112) und der Speichereinheit (116) weitergibt,
∘ eine Überwachungseinheit (117), die so ausgelegt ist, dass sie auf Grundlage des oder der elektrischen Signale (SE5) und/oder des oder der elektrischen Signale (SE6) eine Anomalie in den ersten physikalischen Parametern und/oder den zweiten physikalischen Parametern erkennt, und so ausgelegt ist, dass sie ein elektrisches Warnsignal (SA) sendet, wenn eine Anomalie erkannt wird.

12. Behälter nach Anspruch 11,
**dadurch gekennzeichnet, dass** die Überwachungsvorrichtung (11) weiter umfasst:
- eine fünfte Empfangseinheit (113), die so ausgelegt ist, dass sie das oder die siebten elektrischen Signale (SE7) empfängt,
- eine dritte Erzeugungseinheit (114), die so ausgelegt ist, dass sie mindestens ein achtes elektrisches Signal (SE8) erzeugt, das für das oder die siebten elektrischen Signale (SE7) repräsentativ ist,
- eine dritte Übertragungseinheit (115), die so ausgelegt ist, dass sie das oder die achten elektrischen Signale (SE8) an den oder die Sensoren (9, 10) überträgt.

13. Kommunikationssystem, das dazu bestimmt ist, zu einer Überwachung eines Zustands mindestens einer inneren Vorrichtung beizutragen,
**dadurch gekennzeichnet, dass** es umfasst:
- mindestens einen kommunizierenden Behälter (6) nach einem der Ansprüche 8 bis 12, wobei der oder die kommunizierenden Behälter (6) dazu bestimmt sind, die innere(n) Vorrichtung(en) (7) zu enthalten,
- ein Überwachungssystem (12), das zur Überwachung des oder der ersten physikalischen Parameter beiträgt, die einen momentanen physikalischen Zustand des Inneren des kommunizierenden Behälters (6) charakterisieren, und/oder des oder der zweiten physikalischen Parameter, die einen momentanen physikalischen Zustand der in dem kommunizierenden Behälter (6) enthaltenen inneren Vorrichtung(en) (7) charakterisieren, wobei das Überwachungssystem (12) mindestens einen Überwachungstransponder (132) umfasst, der so ausgelegt ist, dass er das oder die zweiten Lichtsignale (SL2) empfängt, die von dem oder den optischen Transpondern (1) des oder der kommunizierenden Behälter (6) gesendet werden.

14. System nach Anspruch 13,
**dadurch gekennzeichnet, dass** das Überwachungssystem (12) mindestens eine optische Basisstation (13) und einen Konzentrator (14) umfasst,
wobei die optische(n) Basisstation(en) (13) den oder die Überwachungstransponder (132) umfassen,
wobei der oder die Überwachungstransponder (132) mindestens einen ersten Überwachungswandler (130) umfassen, der so ausgelegt ist, dass er mindestens das oder die zweiten Lichtsignale (SL2) empfängt, die von mindestens einem optischen Transponder (1) mindestens eines kommunizierenden Behälters (6) gesendet werden, und mindestens ein achtes elektrisches Signal (SE8) sendet, das für das oder die zweiten Lichtsignale (SL2) repräsentativ ist;
wobei der Konzentrator (14) umfasst:
- eine erste Empfangseinheit (140), die so ausgelegt ist, dass sie das oder die von der oder den optischen Basisstationen (13) gesendeten achten elektrischen Signale (SE8) empfängt,
- eine erste Erzeugungseinheit (141), die so ausgelegt ist, dass sie auf Grundlage des oder der achten elektrischen Signale (SE8) mindestens ein neuntes elektrisches Signal (SE9) erzeugt,
- eine erste Übertragungseinheit (142), die so ausgelegt ist, dass sie das oder die neunten elektrischen Signale (SE9) an eine Benutzervorrichtung (15) überträgt.

15. System nach Anspruch 14,
**dadurch gekennzeichnet, dass** der oder die Überwachungstransponder (132) der optischen Basisstation(en) (13) weiter umfassen:
- einen zweiten Überwachungswandler (131), der so ausgelegt ist, dass er mindestens ein zehntes elektrisches Signal (SE10) von dem Konzentrator (14) empfängt und das oder die ersten Lichtsignale (SL1) an mindestens einen optischen Transponder (1) mindestens eines kommunizierenden Behälters (6) sendet;
wobei der Konzentrator (14) weiter umfasst:
- eine zweite Empfangseinheit (143), die so ausgelegt ist, dass sie mindestens ein elftes elektrisches Signal (SE11) von der Benutzervorrichtung (15) empfängt,
- eine zweite Erzeugungseinheit (144), die so ausgelegt ist, dass sie auf Grundlage des oder der elften elektrischen Signale (SE11) das oder die zehnten elektrischen Signale (SE10) erzeugt,
- eine zweite Übertragungseinheit (145), die so ausgelegt ist, dass sie das oder die zehnten elektrischen Signale (SE10) an die optische(n) Basisstation(en) (13) überträgt.

16. System nach Anspruch 13,
**dadurch gekennzeichnet, dass** der oder die Überwachungstransponder (132) des Überwachungssystems (12) mindestens einen ersten Überwachungswandler (130) umfassen, der so ausgelegt ist, dass er mindestens das oder die zweiten Lichtsignale (SL2) empfängt, die von mindestens einem optischen Transponder (1) mindestens eines kommunizierenden Behälters (6) gesendet werden, und mindestens ein achtes elektrisches Signal (SE8) sendet, das für das oder die zweiten Lichtsignale (SL2) repräsentativ ist,
wobei das Überwachungssystem (12) weiter eine Informationseinheit (133) umfasst, die so ausgelegt ist, dass sie einen Benutzer auf Grundlage des oder der achten elektrischen Signale (SE8) über den oder die ersten physikalischen Parameter und/oder den oder die zweiten physikalischen Parameter informiert.

17. System nach Anspruch 16,
**dadurch gekennzeichnet, dass** der oder die Überwachungstransponder (132) weiter umfassen:
- ein Ansteuerelement (134), das so ausgelegt ist, dass es mindestens ein zehntes elektrisches Signal (SE10) überträgt, das für mindestens einen Ansteuerbefehl repräsentativ ist, wobei der Ansteuerbefehl einer Anforderung zur Übertragung des oder der ersten physikalischen Parameter und/oder des oder der zweiten physikalischen Parameter entspricht,
- einen zweiten Überwachungswandler (131), der so ausgelegt ist, dass er das oder die zehnten elektrischen Signale (SE10) von dem Ansteuerelement (134) empfängt und das oder die ersten Lichtsignale (SL1) an mindestens einen optischen Transponder (1) mindestens eines kommunizierenden Behälters (6) sendet.

## Claims

1. An optical transponder (1) intended to help monitor a state of at least one internal device contained in a communication container capable of being equipped with said optical transponder, the monitoring being capable of being implemented by a monitoring system, the transponder comprising at least:
- a receiving element (2) configured to receive at least one first wireless light signal (SL1) from an optical communication system (16) and to emit at least one first electrical signal (SE1) which is representative of the first light signal or signals (SL1), the first light signal or signals (SL1) being representative of at least one control command,
- an emission element (3) configured to receive at least one second electrical signal (SE2) and to emit at least one second wireless light signal (SL2) which is representative of the second electrical signal or signals (SE2), the second light signal or signals (SL2) being configured to be transmitted by the emission element (3) to the optical communication system (16),
- a control unit (4) comprising:
∘ a first reception module (40) configured to receive the first electrical signal or signals (SE1) from the receiving element (2),
∘ a second reception module (41) configured to receive from at least one sensor (9, 10) housed in the communication container (6) at least one third electrical signal (SE3) representative of at least a first physical parameter characterizing an instantaneous physical state of the interior of the communication container (6) and/or a second physical parameter characterizing an instantaneous physical state of the internal device or devices (7) configured to be contained in the communication container (6),
∘ a first generating module (43) configured to generate the second electrical signal or signals (SE2) representative of the third electrical signal or signals (SE3) as a function of the first electrical signal or signals (SE1),
∘ a first transmission module (42) configured to transmit the second electrical signal or signals (SE2) to the transmission element (3).
the receiving element (2) further comprising a first demodulator (23) configured to translate the first electrical signal or signals (SE1) generated by the photodiode (22) so that they may be used by the control unit (4), the emission element (3) further comprising a second modulator (33) configured to translate the second electrical signal or signals (SE2) generated by the control unit (4) so that they may be used by the light-emitting diode (30), the first demodulator (23) being configured to translate and transmit the first electrical signal or signals (SE1) to the control unit (4) and to wake up the control unit (4) if the control command comprises a predetermined preamble.

2. The transponder according to claim 1,
**characterized in that** the control unit (4) further comprises:
- a second generating module (44) configured to generate at least a fourth electrical signal (SE4) representative of the first electrical signal or signals (SE1),
- a second transmission module (45) configured to transmit the fourth electrical signal or signals (SE4) to the sensor or sensors (9, 10) housed in the communication container (6).

3. The transponder according to any one of claims 1 and 2, **characterized in that** the receiving element (2) corresponds to a first transducer comprising:
- a collection lens (20) arranged to receive the first light signal or signals (SL1) at a predetermined aperture angle of the collection lens (20),
- a first optical filter (21) configured to filter the first light signal or signals (SL1) received by the collection lens (20), the first optical filter (21) being configured to block frequencies of the first light signal or signals (SL1) outside a predetermined frequency range,
- a photodiode (22) arranged to receive the first light signal or signals (SL1) filtered by the first optical filter (21) and capable of generating the first electrical signal or signals (SE1) and transmitting the first electrical signal or signals (SE1) to the control unit (4);
the emission element (3) corresponding to a second transducer comprising a light-emitting diode (32) arranged to receive the second electrical signal or signals (SE2), the light-emitting diode (32) being capable of generating and emitting the second light signal or signals (SL2) which are representative of the second electrical signal or signals (SE2).

4. The transponder according to any one of claims 1 to 3, **characterized in that** the emission element (3) further comprises:
- a second optical filter (31) configured to filter the second light signal or signals (SL2), the second optical filter (31) being configured to block frequencies of the second light signal or signals (SL2) outside a predetermined frequency range,
- an emission lens (30) configured to emit the second light signal or signals (SL2) filtered by the second optical filter (31).

5. The transponder according to any one of claims 1 and 2,
**characterized in that** it further comprises:
- a collection lens (38) arranged to receive the first light signal or signals (SL1),
- a first optical filter (36) configured to filter the first light signal or signals (SL1) received by the collection lens (38), the first optical filter (36) being configured to block frequencies of the first light signal or signals (SL1) outside a predetermined frequency range,
- a separator lens (39) configured to separate the first light signal or signals (SL1) into two secondary light signals (SL11, SL12);
**in that** the emission element (3) comprises:
- a reflector (34) configured to reflect a first secondary signal (SL11) of the two secondary light signals (SL11, SL12),
- a shutter (35) configured to be alternately in a closed position wherein the shutter (35) prevents the first secondary light signal (SL11) from reaching the reflector (34) and in an open position wherein the shutter (35) allows the first secondary light signal (SL11) to reach the reflector (34);
and **in that** the receiving element (2) comprises:
- a photodiode (37) arranged to receive a second secondary light signal (SL12) from the two secondary light signals (SL11, SL12) and capable of generating the first electrical signal or signals (SE1) and transmitting the first electrical signal or signals (SE1) to the control unit (4).

6. The transponder according to claim 5,
**characterized in that** it further comprises:
- a processing unit (394) configured to transmit the first electrical signal or signals (SE1) to the control unit (4) and to receive the second electrical signal or signals (SE2) from the control unit (4),
- a wake-up unit (393) configured to:
∘ receive the first electrical signal or signals (SE1),
∘ generate an electrical wake-up signal (SE12) intended to be transmitted to the processing unit (394) if it detects a predetermined pulse sequence in the first electrical signal or signals (SE1),
- a transmission unit (392) configured to receive the first electrical signal or signals (SE1) generated by the photodiode (37) and to transmit the first electrical signal or signals (SE1);
the processing unit (394) being able to receive the first electrical signal or signals (SE1) from the transmission unit (392) if the processing unit (394) has received the electrical wake-up signal (SE12).

7. The transponder according to any one of claims 5 and 6, **characterized in that** the processing unit (394) is able to transmit to the shutter (35) an electrical shutter control signal (SE21), the electrical shutter control signal (SE21) being capable of controlling the shutter (35) to be alternately in the open position and in the closed position as a function of the second electrical signal or signals (SE2) so that the second light signal or signals (SL2) are representative of the second electrical signal or signals (SE2).

8. A communication container capable of receiving at least one internal device, **characterized in that** it comprises at least one optical transponder (1) according to any one of claims 1 to 7.

9. The container according to claim 8,
**characterized in that** it further comprises:
- at least one optical coordinator device (8) comprising:
∘ a first reception unit (80) configured to receive at least a fifth electrical signal (SE5) representative of at least a first physical parameter characterizing an instantaneous physical state of the interior of the communication container (6),
∘ a second reception unit (81) configured to receive at least a sixth electrical signal (SE6) representative of at least a second physical parameter characterizing an instantaneous physical state of the internal device or devices (7) contained in the communication container (6),
∘ a first generation unit (82) configured to generate the third electrical signal or signals (SE3) from the fourth electrical signal or signals (SE4) and from the fifth electrical signal or signals (SE5),
∘ a first transmission unit (83) configured to transmit the third electrical signal or signals (SE3) to the transponder or transponders (1).

10. The container according to any one of claims 8 and 9, **characterized in that** the optical coordinator device or devices (8) further comprise:
- a third reception unit (84) configured to receive the fourth electrical signal or signals (SE4) from the optical transponder or transponders (1),
- a second generation unit (85) configured to generate at least a seventh electrical signal (SE7) representative of the fourth electrical signal or signals (SE4),
- a second transmission unit (86) configured to transmit the seventh electrical signal or signals (SE7) to the sensor or sensors (9, 10).

11. The container according to any one of claims 8 to 10,
**characterized in that** it further comprises:
- at least one first sensor (9) comprising:
∘ a first measurement module (90) configured to measure at least a first physical parameter characterizing an instantaneous physical state of the interior of the communication container (6), and
∘ a first generating module (91) configured to generate the fifth electrical signal or signals (SE5) representative of the first physical parameter or parameters measured;
- a second sensor (10) comprising:
∘ a second measurement module (100) configured to measure at least one second physical parameter characterizing an instantaneous physical state of the internal device or devices (7) contained in the communication container (6),
∘ a second generating module (101) configured to generate the sixth electrical signal or signals (SE6) representative of the second physical parameter or parameters measured;
- a monitoring device (11) comprising:
∘ a fourth reception unit (110) configured to receive the fifth electrical signal or signals (SE5) and the sixth electrical signal or signals (SE6),
∘ a second transmission unit (112) configured to transmit the fifth electrical signal or signals (SE5) and the sixth electrical signal or signals (SE6) to the optical coordinator device or devices (8),
∘ a storage unit (116) configured to store the first physical parameters and/or the second physical parameters from the electrical signal or signals (SE5) and/or from the electrical signals (SE6), respectively,
∘ a distribution unit (111) configured to distribute the fifth electrical signal or signals (SE5) and the sixth electrical signal or signals (SE6) between the second transmission unit (112) and the storage unit (116),
∘ a monitoring unit (117) configured to detect an abnormality in the first physical parameters and/or the second physical parameters from the electrical signal or signals (SE5) and/or from the electrical signal or signals (SE6) and configured to transmit an electrical alert signal (SA) if an abnormality is detected.

12. The container according to claim 11,
**characterized in that** the monitoring device (11) further comprises:
- a fifth reception unit (113) configured to receive the seventh electrical signal or signals (SE7),
- a third generation unit (114) configured to generate at least one eighth electrical signal (SE8) representative of the seventh electrical signal or signals (SE7),
- a third transmission unit (115) configured to transmit the eighth electrical signal or signals (SE8) to the sensor or sensors (9, 10).

13. A communication system intended to help monitor the state of at least one internal device,
**characterized in that** it comprises:
- at least one communication container (6) according to any one of claims 8 to 12, the communication container or containers (6) being configured to contain the internal device or devices (7),
- a monitoring system (12) helping to the monitoring of the first physical parameter or parameters characterizing an instantaneous physical state of the interior of the communication container (6) and/or of the second physical parameter or parameters characterizing an instantaneous physical state of the internal device or devices (7) contained in the communication container (6), the monitoring system (12) comprising at least one monitoring transponder (132) configured to receive the second light signal or signals (SL2) emitted by the optical transponder or transponders (1) of the communication container or containers (6).

14. The system as claimed in claim 13, **characterized in that** the monitoring system (12) comprises at least one optical base station (13) and a concentrator (14), the optical base station or stations (13) comprising the monitoring transponder or transponders (132),
the monitoring transponder or transponders (132) comprising at least a first monitoring transducer (130) configured to receive at least the second light signal or signals (SL2) emitted by at least one optical transponder (1) of at least one communication container (6) and to emit at least an eighth electrical signal (SE8) which is representative of the second light signal or signals (SL2);
the concentrator (14) comprising:
- a first reception unit (140) configured to receive the eighth electrical signal or signals (SE8) emitted by the optical base station or stations (13),
- a first generation unit (141) configured to generate at least a ninth electrical signal (SE9) from the eighth electrical signal or signals (SE8),
- a first transmission unit (142) configured to transmit the ninth electrical signal or signals (SE9) to a user device (15).

15. The system according to claim 14,
**characterized in that** the monitoring transponder or transponders (132) of the optical base station or stations (13) further comprise:
- a second monitoring transducer (131) configured to receive at least a tenth electrical signal (SE10) from the concentrator (14) and to emit the first light signal or signals (SL1) to at least one optical transponder (1) of at least one communication container (6);
the concentrator (14) further comprising:
- a second reception unit (143) configured to receive at least an eleventh electrical signal (SE11) from the user device (15),
- a second generation unit (144) configured to generate the tenth electrical signal or signals (SE10) from the eleventh electrical signal or signals (SE11),
- a second transmission unit (145) configured to transmit the tenth electrical signal or signals (SE10) to the optical base station or stations (13).

16. The system according to claim 13,
**characterized in that** the monitoring transponder or transponders (132) of the monitoring system (12) comprise at least a first monitoring transducer (130) configured to receive at least the second light signal or signals (SL2) emitted by at least one optical transponder (1) of at least one communication container (6) and to emit at least an eighth electrical signal (SE8) which is representative of the second light signal or signals (SL2),
the monitoring system (12) further comprising an information unit (133) configured to inform a user of the first physical parameter or parameters and/or of the second physical parameter or parameters from the eighth electrical signal or signals (SE8).

17. The system according to claim 16,
**characterized in that** the monitoring transponder or transponders (132) further comprise:
- a control element (134) configured to transmit at least a tenth electrical signal (SE10) representative of at least one control command, the control command corresponding to a request to transmit the first physical parameter or parameters and/or the second physical parameter or parameters,
- a second monitoring transducer (131) configured to receive the tenth electrical signal or signals (SE10) from the control element (134) and to emit the first light signal or signals (SL1) to at least one optical transponder (1) of at least one communication container (6).
